# EUROPÄISCHE PATENTSCHRIFT

(11) **EP 2 932 130 B1**
(45) Veröffentlichungstag und Bekanntmachung des Hinweises auf die Patenterteilung: **21.09.2016**
(21) Anmeldenummer: 13824111.2
(22) Anmeldetag: 10.12.2013
(51) Int. Cl.: F16D 23/12, F16D 28/00, F16D 23/14

(54) **BETÄTIGUNGSVORRICHTUNG FÜR EINE KUPPLUNG, KUPPLUNG, ELEKTRISCHES FAHRMODUL UND VERFAHREN ZUR MONTAGE EINER KUPPLUNG**
ACTUATING DEVICE FOR A CLUTCH, CLUTCH, ELECTRIC DRIVE MODULE AND METHOD FOR MOUNTING A CLUTCH
DISPOSITIF D'ACTIONNEMENT POUR EMBRAYAGE, EMBRAYAGE, MODULE D'ENTRAÎNEMENT ÉLECTRIQUE ET PROCÉDÉ DE MONTAGE D'UN EMBRAYAGE

(30) Priorität: 13.12.2012 DE 102012223000
(43) Veröffentlichungstag der Anmeldung: 21.10.2015
(73) Patentinhaber: Schaeffler Technologies AG & Co. KG, 91074 Herzogenaurach (DE)
(72) Erfinder: NACHTMANN, Florian, F-67100 Straßburg (FR); OSTER, Sebastien, F-67720 Hoerdt (FR); RUDER, Willi, 77933 Lahr (DE); HEITZ, Sébastien, F-67500 Niederschaeffolsheim (FR)
(86) Internationale Anmeldenummer: PCT/DE2013/200344
(87) Internationale Veröffentlichungsnummer: WO 2014/090248

(56) Entgegenhaltungen:
- EP-A1- 1 367 283
- DE-A1- 4 440 532
- DE-A1-102011 050 709
- DE-A1-102012 207 325
- FR-A1- 2 597 561
- GB-A- 1 478 920

## Beschreibung

Die vorliegende Erfindung betrifft eine Kupplung, insbesondere eine Kraftfahrzeugkupplung, gemäß dem Oberbegriff des Anspruchs 1. Darüber hinaus betrifft die vorliegende Erfindung ein Verfahren zur Montage einer Kupplung, insbesondere einer Zuschaltkupplung zum Zuund Abkoppeln eines Verbrennungsmotors an einen und von einem Antriebsstrang eines Hybridfahrzeugs.

Aus der DE 10 2012 207 325 A1 ist eine Kupplung mit einer Betätigungsvorrichtung bekannt, die eine Statoreinrichtung, eine bezüglich der Statoreinrichtung verdrehbare Rotoreinrichtung und eine bezüglich der Rotoreinrichtung in axialer Richtung begrenzt verlagerbare, Zug- und Schubkräfte aufbringende Schlitteneinrichtung aufweist. Zwischen der Rotoreinrichtung und der Schlitteneinrichtung ist ein Wälzkörpergewindetrieb mit einer Mehrzahl von Windungen und einem Wälzkörperumlauf mit in einer Wälzkörperrinne laufenden Wälzkörpern vorgesehen. Die Wälzkörperrinne weist einen derart ausgebildeten Spurwechselbereich auf, dass Wälzkörper in Umfangsrichtung vor dem Spurwechselbereich zwischen einer ersten und einer zweiten Windung laufen, und Wälzkörper in Umfangsrichtung nach dem Spurwechselbereich zwischen der zweiten und einer dritten Windung laufen.

Aus der DE 10 2011 050 709 A1 ist eine Kupplung gemäß dem Oberbegriff des Anspruchs 1 bekannt.

Bezüglich weiteren Standes der Technik wird auf die GB 1 478 920 A, die DE 44 40 532 A1, die FR 2 597 561 A1 und die EP 1 367 283 A1 verwiesen.

Es ist Aufgabe der vorliegenden Erfindung, eine Kupplung , die auf einfache Art und Weise mit einer Betätigungsvorrichtung verbunden und insbesondere in ein elektrisches Fahrmodul eines Hybridfahrzeugs integriert werden kann, und ein Verfahren zur Montage einer solchen Kupplung mit einer Betätigungsvorrichtung zu schaffen.

Hinsichtlich der Kupplung wird diese Aufgabe mit den in Anspruch 1 angegebenen Merkmalen und hinsichtlich des Verfahrens mit den in Anspruch 12 angegebenen Maßnahmen gelöst. Weitere vorteilhafte Ausgestaltungen der vorliegenden Erfindung sind Gegenstand der abhängigen Ansprüche.

Eine Kupplung weist eine Gegendruckplatte, eine in axialer Richtung begrenzt verlagerbare Anpressplatte zur reibschlüssigen Klemmung einer Kupplungsscheibe zwischen der Anpressplatte und der Gegendruckplatte, ein auf die Anpressplatte wirkendes Hebelelement zur Verlagerung der Anpressplatte in axialer Richtung, und eine Betätigungsvorrichtung auf, die sich mit dem Hebelelement in Wirkverbindung befindet.

Die Betätigungsvorrichtung weist eine Statoreinrichtung, eine bezüglich der Statoreinrichtung verdrehbare Rotoreinrichtung und eine bezüglich der Rotoreinrichtung in axialer Richtung begrenzt verlagerbare, Zug- und Schubkräfte aufbringende Schlitteneinrichtung auf, die sich mit einer Zug- und Schubeinrichtung in Wirkverbindung befindet, die ausgebildet ist, auf ein Hebelelement der Kupplung Zug- und Schubkräfte aufzubringen, wobei die Zug- und Schubeinrichtung zumindest ein Zugelement und zumindest ein Schubelement aufweist, zwischen denen das Hebelelement aufnehmbar ist, und die miteinander verbindbar sind.

Das Schubelement und das Zugelement sind derart angeordnet, dass bei Betätigung der Betätigungsvorrichtung Zungen des Hebelelements mit dem Schubelement und dem Zugelement abwechselnd in Anlage bringbar sind.

Wenn die Betätigungsvorrichtung an der Kupplung montiert ist, ist das Hebelelement, mittels dessen die Kupplung eingerückt und ausgerückt werden kann, in axialer Richtung zwischen dem Zugelement und dem Schubelement aufgenommen, so dass Zug- und Schubkräfte auf das Hebelelement übertragen werden können. Da das Zugelement und das Schubelement als zwei separate Bauteile ausgebildet sind, die während der Montage der Betätigungsvorrichtung an der Kupplung miteinander verbindbar sind, ist die Montage auf einfache Art und Weise möglich.

Vorzugsweise sind das Zugelement und das Schubelement lösbar miteinander verbunden. Dabei ist es insbesondere von Vorteil, wenn das Zugelement und das Schubelement mittels mehrerer in Umfangsrichtung verteilt angeordneter Schraube-Hülse-Verbindungen lösbar miteinander verbunden sind. Der Ausdruck "lösbar" beinhaltet in diesem Zusammenhang insbesondere "zerstörungsfrei lösbar". Durch diese Art des Aufbaus ist es möglich, die Betätigungsvorrichtung auf einfache Art und Weise zu demontieren und insbesondere von der Kupplung zu trennen, beispielsweise wenn bei der Montage ein Fehler aufgetreten ist, oder wenn ein Reparaturfall dies erfordert.

Gemäß einem weiteren bevorzugten Ausführungsbeispiel ist das Schubelement axialfest mit einem der Schlitteneinrichtung zugeordneten Ausrücklager verbunden. Insbesondere ist das Schubelement drehfest mit einem Außenring des Ausrücklagers verbunden. Vorzugsweise erfolgt die Verbindung unter axialer Zwischenlage von Bundabschnitten der Schrauben oder Hülsen der Schraube-Hülse-Verbindungen, so dass mittels der in axialer Richtung zwischen dem Ausrücklager und dem Schubelement angeordneten Bundabschnitte die Schrauben oder Hülsen in axialer Richtung fixiert werden können. Dabei ist es insbesondere von Vorteil, wenn die Schrauben oder Hülsen, insbesondere die Bundabschnitte, Verdrehsicherungen aufweisen, so dass Hülsen von einer Seite auf die entsprechenden Schrauben bzw. Schrauben von einer Seite auf die entsprechenden Hülsen aufgeschraubt werden können, ohne den anderen Verschraubungspartner mittels eines zweiten Werkzeugs gegen Mitdrehen fixieren zu müssen.

Gemäß einem weiteren bevorzugten Ausführungsbeispiel ist zwischen der Rotoreinrichtung und der Schlitteneinrichtung ein Wälzkörpergewindetrieb mit zumindest drei Windungen und einem Wälzkörperumlauf mit in einer Wälzkörperrinne laufenden Wälzkörpern vorgesehen, wobei die Wälzkörperrinne einen derart ausgebildeten Spurwechselbereich aufweist, dass Wälzkörper in Umfangsrichtung vor dem Spurwechselbereich zwischen einer ersten und einer zweiten Windung laufen, und Wälzkörper in Umfangsrichtung nach dem Spurwechselbereich zwischen der zweiten und einer dritten Windung laufen. Auf diese Art und Weise ist es insbesondere möglich, gleich große Kräfte in Zug- und Schubrichtung zu erzeugen.

Zusätzlich zum mit Wälzkörpern gefüllten, ringförmigen Wälzkörperumlauf weist die Rotoreinrichtung ein Joch auf. Das Joch der Rotoreinrichtung ist drehbar über ein Stützlager, insbesondere über ein Radiallager, mittelbar oder unmittelbar an der Statoreinrichtung abgestützt.

Vorzugsweise bilden die Statoreinrichtung und die bezüglich der Statoreinrichtung verdrehbare Rotoreinrichtung einen Elektromotor. Der Elektromotor ist vorzugsweise als bürstenloser Gleichstrommotor oder als Drehstrommotor ausgebildet, bei dem Magnete, genauer gesagt Permanentmagnete, rotorseitig und wechselweise bestrombare Windungen statorseitig vorgesehen sind. Gemäß einem bevorzugten Ausführungsbeispiel ist der Elektromotor als Außenläufer ausgebildet, das heißt weist in seinem Inneren die Statoreinrichtung auf, die von der ringförmigen, drehbaren Rotoreinrichtung umgeben ist. Jedoch kann der Elektromotor auch als Innenläufer ausgebildet sein.

Die Betätigungsvorrichtung ist über eine Stromzufuhr bestrombar und vorzugsweise derart im Antriebsstrang des Kraftfahrzeugs gelagert, dass sie ausschließlich zum Einrücken und Ausrücken der Kupplung bestromt werden muss. Durch den Wälzkörpergewindetrieb, der in Wirkrichtung zwischen der Rotoreinrichtung und der Schlitteneinrichtung angeordnet ist, wird eine rotatorische Bewegung der Rotoreinrichtung in eine translatorische Bewegung der Schlitteneinrichtung umgesetzt. Der Wälzkörpergewindetrieb ist vorzugsweise selbsthemmend ausgebildet. Über das Ausrücklager, das beispielsweise als Schrägkugellager ausgebildet ist, aber auch als Kegelrollenlager, zylindrisches Rollenlager oder Gleitlager ausgebildet sein kann, kann die Schlitteneinrichtung mittels der teilbaren Zug- und Schubeinrichtung Zug- und Schubkräfte auf das Hebelelement der Kupplung aufbringen.

Beispielsweise kann die Statoreinrichtung drehfest mit einem Trägerbauteil, insbesondere mit einem Gehäuseträger, ausgebildet sein, so dass die Stromzufuhr zur Statoreinrichtung mittels Kabel und ohne Drehdurchführung oder induktive Kopplung möglich ist. In radialer Richtung innerhalb der Statoreinrichtung bzw. innerhalb des Trägerbauteils verläuft die Eingangswelle der Kupplung bzw. der Abtriebswelle des Verbrennungsmotors. Die Eingangswelle ist bezüglich der Statoreinrichtung bzw. des Trägerbauteils drehbar gelagert.

Jedoch ist es auch möglich, dass die Statoreinrichtung drehfest auf der Eingangswelle der Kupplung angeordnet ist, das heißt sich mit der Drehzahl des Verbrennungsmotors dreht. In diesem Fall ist eine Drehdurchführung oder eine induktive Kopplung zur Bestromung der Betätigungsvorrichtung erforderlich. Die Bestromung der Betätigungsvorrichtung in eine Richtung erzeugt im Vergleich zur Eingangsdrehzahl des Antriebsstrangs eine erhöhte Drehzahl der Rotoreinrichtung, wodurch die Kupplung ausgerückt wird. Die Bestromung der Betätigungsvorrichtung in die andere Richtung erzeugt einen im Vergleich zur Eingangsdrehzahl des Antriebsstrangs verringerte Drehzahl der Rotoreinrichtung, wodurch die Kupplung eingerückt wird. Daher kann der Ausrückvorgang der Kupplung über eine Beschleunigung der Rotoreinrichtung eingeleitet werden, während der Einrückvorgang der Kupplung über ein Abbremsen der Rotoreinrichtung eingeleitet wird. Ebenso ist es auch möglich, dass der Ausrückvorgang der Kupplung durch ein Abbremsen der Rotoreinrichtung eingeleitet wird, während der Einrückvorgang der Kupplung durch eine Beschleunigung der Rotoreinrichtung eingeleitet wird.

Gemäß einem bevorzugten Ausführungsbeispiel weist der Wälzkörpergewindetrieb eine Außenhülse auf, in die eine Formfeder eingesetzt ist, die eine Mehrzahl von Windungen aufweist. Die Formfeder ist insbesondere aus einem schraubenförmig gewundenen Federdraht ausgebildet, wobei in einer bevorzugten Ausgestaltung der gewundene Federdraht konturiert ist, das heißt in axialer Richtung auf beiden Seiten mit einer Anlagekontur versehen ist, die durch einen dazwischen liegenden Kamm getrennt ist. Die benachbarten Anlagekonturen zweier aufeinander folgender Windungen der Formfeder bilden einen Teil der Oberflächengeometrie des Wälzkörpers ab, so dass der jeweilige Wälzkörper in axialer Richtung in einer in Umfangsrichtung verlaufenden Spur zwischen zwei benachbarten Windungen der Formfeder geführt werden kann.

Die Außenhülse ist zur Lagerung der Formfeder mittels eines Deckels abgeschlossen, der mit der Außenhülse durch mehrere in Umfangsrichtung verteilt angeordnete Schrauben verschraubt ist. Zwischen dem Deckel und der Außenhülse ist vorzugsweise eine Ausgleichsscheibe vorgesehen. Ausgleichsscheiben gibt es in unterschiedlicher Stärke, um im Betrieb der Betätigungsvorrichtung einerseits die weitestgehende Spielfreiheit des Wälzkörpergewindetriebs in axialer Richtung und andererseits die Leichtgängigkeit und insbesondere die Klemmfreiheit des Wälzkörpergewindetriebs sicherzustellen. Mittels der passenden Ausgleichsscheibe ist daher beim Zusammenbau der Betätigungsvorrichtung die axiale Länge des Raums, in dem die schraubenförmige Formfeder angeordnet ist, exakt einzustellen.

Der Raum, in dem die Formfeder angeordnet ist, ist in axialer Richtung auf beiden Seiten durch jeweils eine Dichtung nach außen hin abgegrenzt. Jede der beiden Dichtungen, von denen eine außenhülsenseitig und die andere deckelseitig vorgesehen ist, ist gleitbeweglich mit jeweils einer Innenhülse in Anlage, um die translatorische Bewegung der Schlitteneinrichtung zu ermöglichen. Der Raum zwischen den beiden Dichtungen ist vorzugsweise mit Fett gefüllt, das heißt als Fettraum ausgebildet, um die Reibung des Wälzkörpergewindetriebs zu minimieren und ein Verklemmen der Wälzkörper zu verhindern.

Es ist von Vorteil, wenn die zweite Windung den Spurwechselbereich ausschließlich im Bereich einer größten Tiefe der Wälzkörperrinne kreuzt. Die Tiefe der Wälzkörperrinne ist in radialer Richtung der Betätigungsvorrichtung zu bestimmen. Somit kann ein Verklemmen der Wälzkörper beim Kreuzen der zweiten Windung der Formfeder zuverlässig verhindert werden.

Gemäß einem weiteren bevorzugten Ausführungsbeispiel weist die Wälzkörperrinne zumindest einen im Wesentlichen schraubengewindeförmigen Tragbereich auf. Die Steigung des schraubengewindeförmigen Tragbereichs bzw. des Spurwechselbereichs bzw. des Einlauf- oder Auslaufabschnitts ist in axialer Richtung gegenüber dem Umfang zu bestimmen, beispielsweise entsprechend der Steigung des Gewindegangs einer Schraube. Der Tragbereich geht über den Einlaufabschnitt in den Spurwechselbereich über, und der Spurwechselbereich geht über den Auslaufabschnitt in den Tragbereich über. Wenn mehrere Tragbereiche vorgesehen sind, ist es auch möglich, dass der Spurwechselbereich über den Auslaufabschnitt in einen weiteren Tragbereich übergeht.

Vorzugsweise bildet der Spurwechselbereich von einem Ende des Einlaufabschnitts in axialer Richtung einen Rücksprung an einen Anfang des Auslaufabschnitts aus. Durch den Rücksprung können die Wälzkörper zum Anfang des Auslaufabschnitts zurückgeführt werden.

Weiterhin ist es von Vorteil, wenn der Tragbereich in axialer Richtung vollständig zwischen einem Anfang des Spurwechselbereichs und einem Ende des Spurwechselbereichs angeordnet ist. In einem bevorzugten Aufbau ist daher der Anfang des Spurwechselbereichs in axialer Richtung näher an der Kupplung angeordnet als der Tragbereich, während das Ende des Spurwechselbereichs in axialer Richtung weiter von der Kupplung entfernt ist als der Tragbereich. In einem alternativen Aufbau ist es jedoch auch möglich, dass das Ende des Spurwechselbereichs in axialer Richtung näher an der Kupplung angeordnet ist als der Tragbereich, während der Anfang des Spurwechselbereichs in axialer Richtung weiter von der Kupplung entfernt ist als der Tragbereich.

Gemäß einem weiteren bevorzugten Ausführungsbeispiel ist die Steigung des Spurwechselbereichs betragsmäßig größer als die Steigung des Tragbereichs. Je nach Wahl des Bezugssystems ist die Steigung des Tragbereichs positiv, während die Steigung des Spurwechselbereichs stark negativ ist. Dabei erstreckt sich in Umfangsrichtung der Betätigungsvorrichtung der Spurwechselbereich über einen deutlich kleineren Umfangsabschnitt der Rotoreinrichtung, insbesondere des Jochs, als der Tragbereich. Vorzugsweise ist die Steigung des Einlaufabschnitts größer als die Steigung des Tragbereichs. Alternativ oder zusätzlich ist die Steigung des Auslaufabschnitts größer als die Steigung des Tragbereichs. Gemäß einem besonders bevorzugten Ausführungsbeispiel sind die Steigungen des Einlaufabschnitts und des Auslaufabschnitts gleich groß und insbesondere größer als die Steigung des Tragbereichs. Vorzugsweise ist die Steigung des Spurwechselbereichs betragsmäßig größer als die Steigung des Einlaufabschnitts und/oder des Auslaufabschnitts. Weiterhin ist es von Vorteil, wenn die Steigung des Tragbereichs gleichmäßig ist.

Vorzugsweise sind die Wälzkörper als Kugeln ausgebildet. Die Wälzkörperrinne ist vorzugsweise als umlaufende Kugelrinne ausgebildet. Im Tragbereich ist die Kugelrinne vorzugsweise im Wesentlichen U-förmig ausgebildet, wobei die Kugeln im Wesentlichen mit der Hälfte ihres Durchmessers in radialer Richtung der Betätigungsvorrichtung in die Kugelrinne eintauchen.

Weiterhin ist es von Vorteil, wenn die Tiefe des Spurwechselbereichs im Wesentlichen gleich dem, vorzugsweise größer als der, Durchmesser der Kugeln ist. Dies bedeutet, dass im Spurwechselbereich die Kugeln in radialer Richtung der Betätigungsvorrichtung zumindest nahezu vollständig in die Kugelrinne eintauchen können. Die Eintauchtiefe muss mindestens so groß sein, dass die Kugeln von der zwischen der in axialer Richtung der Betätigungsvorrichtung zwischen der ersten und zweiten Windung angeordneten Spur zu der in axialer Richtung zwischen der zweiten und dritten Windung angeordneten Spur wechseln können, ohne dabei die zweite Windung, insbesondere den Kamm der Formfeder im Bereich der zweiten Windung, zu berühren. Dies sollte auch sichergestellt sein, wenn die Schlitteneinrichtung während des Betriebs der Betätigungsvorrichtung verkippt, so dass es insbesondere von Vorteil ist, wenn die Kugeln im Spurwechselbereich vollständig in die Kugelrinne eintauchen können, das heißt, wenn der Durchmesser der Kugeln zumindest der Tiefe des Spurwechselbereichs in radialer Richtung der Betätigungsvorrichtung entspricht. Vorzugsweise ist der Durchmesser kleiner als die Tiefe des Spurwechselbereichs.

In einem bevorzugten Ausführungsbeispiel ist bei einem als Außenläufer ausgebildeten Elektromotor der Wälzkörperumlauf im Außenumfang der Rotoreinrichtung angeordnet, während dementsprechend die Formfeder, zwischen deren Windungen die Wälzkörper laufen, radial außerhalb angeordnet und als innenkonturierte Formfeder ausgebildet ist, wobei sowohl der Kamm, als auch die Anlagekonturen für die Wälzkörper in radialer Richtung nach innen weisen. Dementsprechend weist die Rotoreinrichtung die umlaufende Wälzkörperrinne in ihrem Außenumfang auf. Jedoch ist es auch möglich, beispielsweise bei der Ausbildung des Elektromotors als Innenläufer, den Wälzkörperumlauf im Innenumfang einer Rotoreinrichtung vorzusehen, und dementsprechend die Formfeder radial innerhalb anzuordnen und als außenkonturierte Formfeder auszubilden. Dementsprechend weist die Rotoreinrichtung die umlaufende Wälzkörperrinne in ihrem Innenumfang auf.

Bei der Kupplung handelt es sich insbesondere um eine Reibungskupplung, wie sie zwischen dem Verbrennungsmotor und/oder einem Elektromotor und dem Getriebe eines Kraftfahrzeugs für den Gangwechsel vorgesehen ist. Insbesondere kann die Betätigungsvorrichtung in Hybridfahrzeugen vorgesehen sein. Die Kupplung kann einerseits als Einzelkupplung ausgebildet sein, kann jedoch auch als Mehrfachkupplung, insbesondere als Doppelkupplung, ausgebildet sein. Bei einer Doppelkupplung sind vorzugsweise zwei Betätigungsvorrichtungen der vorgenannten Art vorzusehen. Insbesondere kann die Reibungskupplung auch als Zuschaltkupplung zum Zu- und Abkoppeln des Verbrennungsmotors an einen und von einem Antriebsstrang eines Hybridfahrzeugs ausgebildet sein, um beispielsweise beim rein elektrischen Fahren Trägheitsmomente und Reibungen durch Abkoppeln des Verbrennungsmotors zu minimieren.

Die Kupplung kann sowohl als Trockenkupplung, als auch als Nasskupplung ausgebildet sein. Bei der Kupplung kann es sich einerseits um eine im betätigungsfreien Zustand eingerückte, das heißt normal-eingerückte Kupplung, oder andererseits um eine im betätigungsfreien Zustand ausgerückte, das heißt normal-ausgerückte Kupplung, handeln. Bei einer normal-eingerückten Kupplung ist das Hebelement, auf das die Betätigungsvorrichtung wirkt, üblicherweise als Tellerfeder ausgebildet, während bei einer normal-ausgerückten Kupplung das Hebelement, auf das die Betätigungsvorrichtung wirkt, üblicherweise als Hebelfeder ausgebildet ist.

Das Hebelelement weist vorzugsweise eine Schnappfedercharakteristik auf. Hierbei durchfährt das Hebelelement beispielsweise im ausgerückten Zustand der Kupplung einen negativen Kraftbereich, wobei die Ausrückkraft abgesenkt wird. Um den Einrückvorgang einzuleiten und den negativen Kraftbereich zu verlassen, kann das Hebelelement durch das Zugelement beaufschlagt, das heißt gezogen, werden.

Vorzugsweise ist das Hebelelement, insbesondere Zungen des im Wesentlichen ringförmig ausgebildeten Hebelelements, in axialer Richtung zwischen dem Schubelement und dem Zugelement angeordnet. Ist die Kupplung beispielsweise als normal-eingerückte Kupplung ausgebildet, kann die Kupplung, wenn das Schubelement mit der Tellerfeder in Anlage kommt und auf die Tellerfeder Schubkräfte überträgt, ausgerückt werden. Kommt das Zugelement bei eingerückter Kupplung mit der Tellerfeder in Anlage und überträgt Zugkräfte auf die Tellerfeder, kann die Anpresskraft der Anpressplatte kurzfristig über die Kraft der Tellerfeder hinaus erhöht werden, um die Kupplungsscheibe stärker zwischen der Anpressplatte und der Gegendruckplatte zu klemmen. Hierdurch weist die Kupplung eine erhöhte Drehmomentkapazität auf, was beispielsweise von Vorteil ist, wenn der Verbrennungsmotor bei tiefen Temperaturen, z.B. bei Temperaturen unter 20°C, 25°C oder 30°C gestartet werden soll, oder wenn mittels des Verbrennungsmotors angefahren werden soll. Hierbei ist ein höheres Drehmoment erforderlich als im Normalbetrieb der Kupplung, das heißt die Kupplung kann auf ein geringeres Drehmoment ausgelegt werden, und Drehmomentspitzen können mittels des besagten Zugelements und durch die Kupplung kurzzeitig übertragen werden. Insbesondere kann diese Auslegung der Kupplung mit dem Hebelelement, das die zuvor erläuterte Schnappfedercharakteristik aufweist, kombiniert werden.

Gemäß einem weiteren bevorzugten Ausführungsbeispiel ist ein Zentralflansch in axialer Richtung zwischen der Zug- und Schubeinrichtung und der Gegendruckplatte angeordnet. Insbesondere ist der Zentralflansch in axialer Richtung zwischen der Zug- und Schubeinrichtung und der Anpressplatte angeordnet. Der Zentralflansch ist drehfest mit einem Gehäusebauteil der Kupplung verbunden.

Vorzugsweise ist das Zugelement in axialer Richtung näher am Zentralflansch angeordnet als das Schubelement. Dies ist insbesondere bei einer normal-eingerückten Kupplung von Vorteil.

Gemäß einem besonders bevorzugten Ausführungsbeispiel weist der Zentralflansch zumindest eine Durchgriffsöffnung auf, durch die das Schubelement und das Zugelement miteinander montiert werden können. Somit muss die Kupplung nicht Bauteil für Bauteil montiert werden, sondern es können Unterbaugruppen gebildet werden, die vormontiert werden können. Anschließend werden diese vormontierten Unterbaugruppen zum Gesamtsystem zusammengefügt.

Gemäß einem weiteren bevorzugten Ausführungsbeispiel weist der Zentralflansch zumindest eine Positionierungsöffnung auf, durch die das Schubelement und das Zugelement relativ zueinander positioniert werden können. Dies ist insbesondere von Vorteil, wenn die vormontierte Betätigungsvorrichtung und die vormontierte Kupplung relativ zueinander positioniert werden, in diesem Zustand aber das Schubelement und das Zugelement nicht mehr frei zugänglich sind. Durch die Positionierungsöffnung ist es trotzdem noch möglich, die beiden Elemente relativ zueinander auszurichten und anschließend miteinander zu montieren.

Vorzugsweise sind im Zentralflansch mehrere Durchgriffsöffnungen und mehrere Positionierungsöffnungen in Umfangsrichtung verteilt angeordnet. Insbesondere ist es von Vorteil, wenn die Durchgriffsöffnungen und Positionierungsöffnungen in Umfangsrichtung abwechselnd angeordnet sind. Weiterhin ist es von Vorteil, wenn die Durchgriffsöffnungen auf einem anderen Radius angeordnet sind als die Positionierungsöffnungen, um insbesondere die Positionierung von Schubelement und Zugelement zueinander mittels eines Positionierungswerkzeugs aufrecht zu halten, während Schubelement und Zugelement mittels eines Montagewerkzeugs miteinander verbunden werden.

Es ist von Vorteil, wenn das Zugelement Positionierungsöffnungen aufweist, die bei der Montage ein Verdrehen des Zugelements relativ zum Schubelement ermöglichen. Vorzugsweise sind die Positionierungsöffnungen des Zugelements auf dem selben Radius angeordnet wie die Positionierungsöffnungen des Zentralflansches. Hierdurch ist ein gradliniger Durchgriff mittels eines Positionierungswerkzeugs durch den Zentralflansch auf das Zugelement möglich. Dabei ist es weiterhin insbesondere von Vorteil, wenn auch das Schubelement zumindest eine solche Positionierungsöffnung auf dem selben Durchmesser wie das Zugelement und der Zentralflansch aufweist.

Vorzugsweise weist ein Hybridmodul für ein Hybridfahrzeug einen elektrischen Fahrmotor auf, in dessen Rotor eine Kupplung integriert ist, wie sie zuvor beschrieben worden ist, wobei insbesondere der Rotor des Fahrmotors als Gehäusebauteil der Kupplung ausgebildet und drehfest mit dem Zentralflansch verbunden ist.

Ferner wird die vorgenannte Aufgabe erfindungsgemäß gelöst durch ein Verfahren zur Montage einer Kupplung mit einer Betätigungsvorrichtung, insbesondere einer Zuschaltkupplung zum Zu- und Abkoppeln eines Verbrennungsmotors an einen und von einem Antriebsstrang eines Hybridfahrzeugs wobei die Betätigungsvorrichtung ausgebildet ist, über eine in axialer Richtung begrenzt verlagerbare Zug- und Schubeinrichtung Zug- und Schubkräfte auf ein Hebelelement der Kupplung aufzubringen, wobei das Verfahren die folgenden Schritte aufweist: Vormontieren eines Schubelements der Zug- und Schubeinrichtung mit vormontierten Hülsen an einem einer Schlitteneinrichtung zugeordneten Ausrücklager, Einlegen eines Zugelements mit vormontierten Schrauben zwischen dem Hebelelement und einem Zentralflansch der Kupplung, Einpressen der vormontierten Betätigungsvorrichtung mit der Schlitteneinrichtung in den Zentralflansch der Kupplung unter Vermittlung eines Zentrallagers, und Verschrauben des Zugelements mit dem Schubelement in axialer Richtung, insbesondere durch Durchgriffsöffnungen im Zentralflansch.

Optional kommt dabei die Positionierung des Zugelements zum Schubelement durch Positionierungsöffnungen im Zentralflansch hinzu, sollten Zugelement und Schubelement sich relativ zueinander verdreht haben, während die vormontierte Betätigungsvorrichtung in den Zentralflansch der Kupplung bzw. in das bereits im Zentralflansch eingepresste Zentrallager eingepresst worden ist.

Die vorliegende Erfindung wird nachfolgend anhand von bevorzugten Ausführungsbeispielen in Verbindung mit den zugehörigen Figuren näher erläutert. In diesen zeigen:
- Figur 1: ein Ausführungsbeispiel einer Kupplung mit einer Betätigungsvorrichtung, die eine Zug- und Schubeinrichtung aufweist, wobei die Zug- und Schubeinrichtung noch nicht abschließend montiert ist, in einer Schnittansicht,
- Figur 2: eine Schlitteneinrichtung der Betätigungsvorrichtung aus Figur 1 in einer Detailansicht,
- Figur 3: die Zug- und Schubeinrichtung mit einem Ausrücklager der Betätigungsvorrichtung aus Figur 1 in einer Detailansicht,
- Figur 4: ein Schubelement der Zug- und Schubeinrichtung aus Figur 1 in einer Detailansicht,
- Figur 5: das Schubelement der Zug- und Schubeinrichtung aus Figur 3 mit darunter liegendem Ausrücklager in einer Draufsicht,
- Figur 6: ein Zugelement der Zug- und Schubeinrichtung aus Figur 3 in einer Schnittansicht,
- Figur 7: eine vormontierte Baugruppe der Kupplung aus Figur 1 mit eingelegtem Zugelement in einer Schnittansicht, und
- Figur 8: die vormontierte Baugruppe der Kupplung mit eingelegtem Zugelement aus Figur 7 in einer weiteren Schnittansicht.

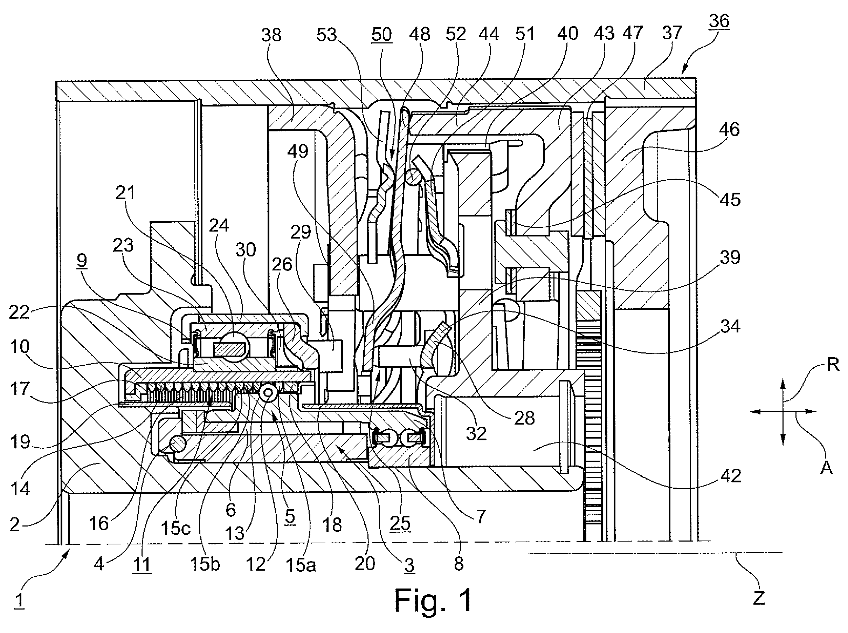

Die Figuren 1 bis 8 betreffen ein Ausführungsbeispiel einer Betätigungsvorrichtung 1 für eine Kupplung 36, sowie eine Kupplung 36 mit einer Betätigungsvorrichtung 1, insbesondere für einen Antriebsstrang eines Kraftfahrzeugs. Insbesondere betreffen die Figuren 1 bis 8 ein elektrisches Fahrmodul, das insbesondere als Hybridmodul für ein Hybridfahrzeug ausgebildet ist, bei dem die Kupplung 36 als Zuschaltkupplung zum Zu- und Abkoppeln eines Verbrennungsmotors an den und von dem Antriebsstrang des Hybridfahrzeugs ausgebildet ist. Ferner betreffen die Figuren 1 bis 8 ein Verfahren zur Montage der Kupplung 36 mit der Betätigungsvorrichtung 1, das heißt insbesondere ein Verfahren zur Montage eines elektrischen Fahrmoduls, insbesondere eines Hybridmoduls für ein Hybridfahrzeug. Merkmale und Verfahrensschritte, die in der vorliegenden Beschreibung nicht als erfindungswesentlich gekennzeichnet sind, sind als optional zu verstehen. Daher betrifft die nachfolgende Beschreibung auch weitere Ausführungsbeispiele der Betätigungsvorrichtung 1 für die Kupplung 36, der Kupplung 36 und der Betätigungsvorrichtung 1, des elektrischen Fahrmoduls sowie des Verfahrens zur Montage der Kupplung 36 und der Betätigungsvorrichtung 1, die Teilkombinationen der im Folgenden zu erläuternden Merkmale und Verfahrensschritte aufweisen.

Die Kupplung 36 ist drehbar um eine Drehachse Z gelagert und weist zumindest eine Anpressplatte 43, zumindest eine Gegendruckplatte 46 und zumindest eine in axialer Richtung A der Kupplung 36 zwischen der Anpressplatte 43 und der Gegendruckplatte 46 angeordnete Kupplungsscheibe 47 auf. Die Gegendruckplatte 46 ist mit einem Gehäusebauteil 37 der Kupplung 36 fest verbunden, insbesondere verschraubt, verstiftet oder verzahnt, kann aber auch einteilig mit dem Gehäusebauteil 37 ausgebildet sein. Die Anpressplatte 43 ist im Gehäusebauteil 37 drehfest gelagert und in axialer Richtung A begrenzt verlagerbar. Insbesondere ist die Anpressplatte 43 mittels mehrerer, in Umfangsrichtung verteilt angeordneter Blattfedern 45 drehfest im Gehäusebauteil 37 befestigt und von der Gegendruckplatte 46 weg vorgespannt.

Die Blattfedern 45 können zur Übertragung des Drehmoments auf die Anpressplatte 43 und zur Vorspannung der Anpressplatte 43 am Gehäusebauteil 37 oder an der Gegendruckplatte 46 befestigt sein, sind im dargestellten Ausführungsbeispiel aber vorzugsweise an einem Zentralflansch 39 der Kupplung 36 befestigt. Im dargestellten Ausführungsbeispiel ist der Zentralflansch 39 innerhalb des Gehäusebauteils 37 auf der der Gegendruckplatte 46 gegenüberliegenden Seite der Kupplungsscheibe 47, das heißt in Nachbarschaft zur Anpressplatte 43, angeordnet. Der Zentralflansch 39 ist fest mit dem Gehäusebauteil 37 verbunden, beispielsweise verschraubt, verstiftet oder verzahnt, kann aber auch einteilig mit dem Gehäusebauteil 37 ausgebildet sein. In seinem radialen Außenbereich weist der Zentralflansch 39 in Nachbarschaft zur Innenwand des Gehäusebauteils 37 mehrere, in Umfangsrichtung verteilt angeordnete Aussparungen 40 auf, durch die sich Anpressplattennocken 44 hindurch erstrecken.

Die Anpressplattennocken 44 sind einteilig mit der Anpressplatte 43 ausgebildet und erstrecken sich in axialer Richtung A der Kupplung 36 von der der Gegendruckplatte 46 abgewandeten Seite der Anpressplatte 43 durch die im Zentralflansch 39 vorgesehenen Aussparungen 40 hindurch, um an einem Kraftrand eines Hebelelements 48 anzuliegen. Somit ist der Zentralflansch 39 in axialer Richtung A zwischen der Gegendruckplatte 46 und dem Hebelelement 48, genauer gesagt zwischen einer Reibfläche der Anpressplatte 43 und dem Hebelelement 48 angeordnet, wobei sich die Anpressplattennocken 44 der Anpressplatte 43 durch den Zentralflansch 39 hindurch erstrecken.

Über ein nicht dargestelltes, im Bereich des Bezugszeichens 42 angeordnetes Zentrallager, stützt sich der Zentralflansch 39 in radialer Richtung R nach innen an einem Trägerbauteil 2 verdrehbar ab. Das Trägerbauteil 2 ist der Betätigungsvorrichtung 1 zuzuordnen. Das Zentrallager 42 ist vorzugsweise als Wälzlager, beispielsweise als ein- oder zweireihiges Kugellager, insbesondere Doppelschrägkugellager, ausgebildet, kann aber auch als zylindrisches Rollenlager, beispielsweise Kegelrollenlager, oder Gleitlager, ausgebildet sein. In radialer Richtung R außerhalb des Zentrallagers 42 ist der Zentralflansch 39 fest mit einem Deckelbauteil 38 verbunden und von diesem beispielsweise mittels Stufenstiften beabstandet. In seinem radialen Außenbereich ist das Deckelbauteil 38 seinerseits am Gehäusebauteil 37 befestigt oder liegt zumindest an diesem an. Das Deckelbauteil 38 grenzt die eigentliche Kupplung 36, genauer gesagt den drehmomentübertragenden Bereich der Kupplung 36, in axialer Richtung A zur Betätigungsvorrichtung 1 ab. Das Hebelelement 48 erstreckt sich im Wesentlichen in radialer Richtung R der Kupplung 36 innerhalb des Gehäusebauteils 37 und in axialer Richtung A zwischen dem Deckelbauteil 38 und dem Zentralflansch 39. Das Hebelelement 48 weist vorzugsweise Aussparungen auf, durch die sich die Stufenstifte, die das Deckelbauteil 38 und den Zentralflansch 39 beabstanden, in axialer Richtung A hindurch erstrecken.

Das Hebelelement 48 kann für eine normal-eingerückte, in Figur 1 dargestellte Kupplung 36 als Tellerfeder und für eine normal-ausgerückte Kupplung als Hebelfeder ausgebildet sein. Das Hebelelement 48 ist gehäuseseitig abgestützt und durch die Betätigungsvorrichtung 1 betätigbar. Hierzu weist das Hebelelement 48, das im Wesentlichen ringförmig ausgebildet ist, Zungen 49 auf, die sich in radialer Richtung R vom Kraftrand des Hebelelements 48 nach innen erstrecken. Zwischen Ausnehmungen der Zungen 49 erstrecken sich vorzugsweise die zuvor genannten Stufenstifte, die das Deckelbauteil 48 und den Zentralflansch 49 beabstanden. Die Zungen 49 sind mit einer Zug- und Schubeinrichtung 25 der Betätigungsvorrichtung 1, auf die nachfolgend noch eingegangen wird, in Wirkverbindung bringbar, um die Kupplung 36 einzurücken bzw. auszurücken.

Bei einer normal-eingerückten Kupplung 36 überwiegt die wirksame Kraft des als Tellerfeder ausgebildeten Hebelelements 48 die Gegenkraft der Blattfedern 45, während bei einer normal-ausgerückten Kupplung die Gegenkraft der Blattfedern 45 die wirksame Kraft des als Hebelfeder ausgebildeten Hebelelements überwiegt. Dementsprechend führt eine Betätigung der Tellerfeder der normal-eingerückten Kupplung 36 durch die Betätigungsvorrichtung 1 zum Ausrücken der Kupplung 36 durch Verkippen bzw. Umschnappen der Tellerfeder, das heißt zum Abhub der Anpressplatte 43 und zur Entfernung der Anpressplatte 43 von der Gegendruckplatte 46, während eine Betätigung der Hebelfeder bei einer normal-ausgerückten Kupplung durch die Betätigungsvorrichtung zum Einrücken der Kupplung durch Verkippen der Hebelfeder führt.

Bei eingerückter Kupplung 36 wird ein Drehmoment von der Eingangsseite der Kupplung 36, beispielsweise von einem Zweimassenschwungrad oder einem Verbrennungsmotor oder einem elektrischen Fahrmotor, über das Kupplungsgehäuse und sowohl die Gegendruckplatte 46, als auch die Anpressplatte 43, die beide mit dem Kupplungsgehäuse, insbesondere mit dem Gehäusebauteil 37, drehfest verbunden sind, reibschlüssig auf die Kupplungsscheibe 47 übertragen. Von der Kupplungsscheibe 47, die reibschlüssig zwischen der Gegendruckplatte 46 und der Anpressplatte 43 geklemmt ist, wird das Drehmoment zur Ausgangsseite der Kupplung 36 übertragen, beispielsweise zu einer Eingangswelle eines Getriebes.

Insbesondere im Ausführungsbeispiel, das in Figur 1 dargestellt ist, und das vorzugsweise in einem hybriden Antriebsstrang eines Hybridfahrzeugs vorgesehen ist, sind jedoch auch andere Übertragungswege möglich. Beispielsweise kann die Kupplung 36 als Zuschaltkupplung zum Zu- und Abkoppeln des Verbrennungsmotors an den und von dem hybriden Antriebsstrang ausgebildet sein. Hierzu kann der Verbrennungsmotor, genauer gesagt die Abtriebswelle des Verbrennungsmotors oder die Ausgangsseite eines zwischen dem Verbrennungsmotor und der Kupplung 36 angeordneten Zweimassenschwungrads mit der Kupplungsscheibe 47 drehmomentübertragend verbunden sein.

Ein in Figur 1 nicht dargestellter elektrischer Fahrmotor ist im Außenumfang der Kupplung 36 derart angeordnet, dass ein Rotor des elektrischen Fahrmotors drehfest mit dem Gehäusebauteil 37 verbunden ist oder einteilig mit dem Gehäusebauteil 37 ausgebildet ist. Das Drehmoment des als Innenläufer ausgebildeten elektrischen Fahrmotors wirkt daher auch auf den Zentralflansch 39, die Anpressplatte 43 und die Gegendruckplatte 46, selbst wenn die Kupplung 36 ausgerückt ist. Beim Einrücken der Kupplung 36 kann das Drehmoment des elektrischen Fahrmotors dazu genutzt werden, den Verbrennungsmotor anzulassen. Ferner können bei eingerückter Kupplung 36 das Drehmoment des elektrischen Fahrmotors und des Verbrennungsmotors zum Antrieb des Fahrzeugs benutzt werden. Gleichermaßen ist es möglich, bei eingerückter Kupplung 36 ausschließlich mit dem Verbrennungsmotor zu fahren und den elektrischen Fahrmotor im Generatorbetrieb zu betreiben, um einen Akkumulator zu laden.

Da aufgrund des Reibschlusses sowohl die Reibbeläge der Kupplungsscheibe 47, als auch in geringerem Maße die Reibflächen der Gegendruckplatte 46 und der Anpressplatte 43 einem Verschleiß unterworfen sind, muss über die Lebensdauer der Kupplung 36 die Anpressplatte 43 immer näher an die Gegendruckplatte 46 heranbewegt werden, um die Abnahme der Dicke der Reibbeläge und der Stärke der Reibflächen in axialer Richtung A zu kompensieren und den Reibschluss herstellen bzw. die Kupplung 36 einrücken zu können. Hierzu ist die Kupplung 36 im Ausführungsbeispiel, das in Figur 1 dargestellt ist, mit einer kraftbasierten Verschleißnachstelleinrichtung 50 ausgestattet. Die Verschleißnachstelleinrichtung 50 weist eine Sensorfeder 51 auf, die mittelbar oder unmittelbar zwischen dem Zentralflansch 39 und dem Hebelelement 48 verspannt ist. Ferner weist die Verschleißnachstelleinrichtung 50 einen Verstellring 53 auf, der zwischen dem Hebelelement 48 und dem Deckelbauteil 38 angeordnet ist, und dessen Rampen gleitbeweglich auf Gegenrampen angeordnet sind, die am Deckelbauteil 38 ausgebildet sind. Ferner ist der Verstellring 53 gegenüber dem Deckelbauteil 38 durch zumindest eine Antriebseinrichtung, insbesondere eine Antriebsfeder, derart vorgespannt, dass die Rampen des Verstellrings 53 unter der Federvorspannung an den Gegenrampen des Deckelbauteils 38 hochgleiten können.

Wenn aufgrund von Kupplungsverschleiß insbesondere die Dicke der Reibbeläge der Kupplungsscheibe 47 abnimmt, drückt zum Einrücken der Kupplung 36 das als Tellerfeder ausgebildete Hebelelement 48 die Anpressplatte 43 über die Anpressplattennocken 44 weiter in Richtung der Gegendruckplatte 46, das heißt mit Bezug auf Figur 1 nach rechts, um die Kupplungsscheibe 47 reibschlüssig zwischen der Anpressplatte 43 und der Gegendruckplatte 46 zu klemmen, das heißt die Kupplung 36 einzurücken. Hierbei muss sich das Hebelelement 48 stärker aufstellen, wodurch das Kraftniveau des Hebelelements 48 steigt. Das gestiegene Kraftniveau des Hebelelements 48 sorgt beim Ausrücken der Kupplung 36 dafür, dass die Sensorfeder 51 während des Ausrückvorgangs verlagert wird, das heißt der Kupplungsverschleiß sensiert wird, und dafür, dass sich das Hebelelement 48 durch die Verlagerung der Sensorfeder 51 vom in Umfangsrichtung vorgespannten Verstellring 53 abhebt. Dadurch wird der Verstellring 53 klemmkraftfrei, so dass er sich unter Vorspannung der Antriebsfeder relativ zum Deckelbauteil 38 verdrehen kann, wobei die Rampen des Verstellrings 53 an den Gegenrampen des Deckelbauteils 38 so weit hochgleiten, bis der Verstellring 53 wieder mit dem Hebelelement 48 in Anlage kommt und somit geklemmt wird, das heißt bis der Kupplungsverschleiß nachgestellt worden ist.

Obwohl in Figur 1 nur eine kraftbasierte Verschleißnachstellung 50 dargestellt ist, sei an dieser Stelle erwähnt, dass auch eine wegbasierte Verschleißnachstelleinrichtung vorgesehen sein kann. Ebenso kann auf eine Verschleißnachstelleinrichtung verzichtet werden, beispielsweise wenn die Kupplung 36 nur auf eine kurze Lebensdauer ausgelegt ist, in der Kupplungsverschleiß zu vernachlässigen ist, oder wenn durch entsprechende Bauteilauslegungen der Kupplungsverschleiß während der Lebensdauer auf ein tolerables Maß verringert werden kann.

Im dargestellten Ausführungsbeispiel wirkt die Sensorfeder 51 mittelbar auf das Hebelelement 48, indem ein Drahtring 52 zwischen der Sensorfeder 51 und dem Hebelelement 48 vorgesehen ist. Der Drahtring 52 definiert eine Schwenklagerung, mittels derer das Hebelelement 48 zum Einrücken und Ausrücken der Kupplung 36 verkippbar gelagert ist. Diese Schwenklagerung kann jedoch auch getrennt von der Verschleißnachstellrichtung 50 vorgesehen sein, beispielsweise indem sich der Drahtring 52 an den Stufenstiften oder am Zentralflansch 39 oder am Deckelbauteil 38 abstützt. Auch kann auf den Drahtring 52 gänzlich verzichtet werden, beispielsweise wenn am Zentralflansch 39 und/oder am Deckelbauteil 38 entsprechend gestaltete Auflagenocken ausgebildet sind, über die das Hebelelement 48 verschwenkt werden kann.

Die mit der Kupplung 36 verbundene Betätigungsvorrichtung 1 bzw. die in die Kupplung 36 integrierte Betätigungsvorrichtung 1, die auf die Zungen 49 des Hebelelements 48 wirkt, weist eine Statoreinrichtung 3 und eine bezüglich der Statoreinrichtung 3 verdrehbare Rotoreinrichtung 5 auf. Beispielsweise kann die Statoreinrichtung 3 drehfest mit dem Trägerbauteil 2, insbesondere mit einem Gehäuseträger, ausgebildet sein. Vorzugsweise bilden die Statoreinrichtung 3 und die Rotoreinrichtung 5 einen Elektromotor, insbesondere einen bürstenlosen Gleichstrommotor oder einen Drehstrommotor. Hierzu ist die Statoreinrichtung 3 mit einer Stromzufuhr 4 versehen, um in nicht dargestellten, statorseitigen Spulen ein wechselndes elektromagnetisches Feld zu erzeugen. Die Rotoreinrichtung 5 weist zur magnetischen Wechselwirkung mit den statorseitigen Elektromagneten Magnete 6, genauer gesagt Permanentmagnete, auf.

Vorzugsweise ist der Elektromotor als sogenannter Außenläufer ausgebildet, das heißt die Statoreinrichtung 2 ist in radialer Richtung R der Betätigungsvorrichtung 1 bzw. der Kupplung 36 innerhalb der Rotoreinrichtung 5 angeordnet. Es ist jedoch auch möglich, den Elektromotor als Innenläufer auszubilden, das heißt die Statoreinrichtung 2 in radialer Richtung R außerhalb der Rotoreinrichtung 5 anzuordnen.

Die in Figur 1 dargestellte Rotoreinrichtung 5 weist ein Joch 7 auf, das auf Seiten der Kupplung 36, das heißt mit Bezug auf Figur 1 auf der rechten Seite, in radialer Richtung R durch ein Stützlager 8 abgestützt ist. Somit ist im dargestellten Ausführungsbeispiel das Stützlager 8 in axialer Richtung A der Betätigungsvorrichtung 1 bzw. der Kupplung 36 auf der entgegengesetzten Seite der Stromzufuhr 4 für die Statoreinrichtung 3 angeordnet. Das Stützlager 8 kann mittelbar oder unmittelbar mit der Statoreinrichtung 3 verbunden sein. Das Stützlager 8 ist vorzugsweise als Wälzlager, insbesondere als Kugellager, vorzugsweise wie dargestellt als Doppelkugellager, ausgebildet. Jedoch ist auch ein zylindrisches Rollenlager oder ein Gleitlager möglich.

Zusätzlich zur Statoreinrichtung 3 und zur Rotoreinrichtung 5 weist die Betätigungsvorrichtung 1 eine bezüglich der Rotoreinrichtung 5 in axialer Richtung A begrenzt verlagerbare, Zug- und Schubkräfte aufbringende Schlitteneinrichtung 9 auf. Die Schlitteneinrichtung 9 ist in radialer Richtung R außerhalb der Rotoreinrichtung 5 angeordnet. Die Schlitteneinrichtung 9 weist eine Außenhülse 10 auf, die auf Seiten der Stromzufuhr 4 für die Statoreinrichtung 3, das heißt mit Bezug auf Figur 1 auf der linken Seite, durch einen nicht als separates Bauteil dargestellter Deckel abgeschlossen ist. In axialer Richtung A zwischen der Außenhülse 10 und dem Deckel ist eine nicht als separates Bauteil dargestellte Ausgleichsscheibe angeordnet, um die axiale Länge des durch die Außenhülse 10 und den Deckel begrenzten Bauraums für eine Formfeder 14 eines Wälzkörpergewindetriebs 11, auf den nachfolgend noch eingegangen wird, zu definieren und einzustellen. Mittels mehrerer in Umfangsrichtung der Betätigungsvorrichtung 1 bzw. der Kupplung 36 angeordneter, nicht dargestellter Schrauben, ist der Deckel durch die Ausgleichsscheibe hindurch mit der Außenhülse 10 verschraubt.

In axialer Richtung A auf beiden Seiten der Schlitteneinrichtung 9 ist jeweils eine Dichtung 17, 18 vorgesehen, die den Raum, in dem die Formfeder 14 des Wälzkörpergewindetriebs 11 angeordnet ist, nach außen hin abdichtet. Die erste und zweite Dichtungen 17, 18 sind beispielsweise als ringförmige Lippendichtungen aus einem Elastomer oder einem gummi- bzw. kautschukhaltigen Material ausgebildet. In radialer Richtung R innerhalb ist die erste Dichtung 17 in gleitbeweglicher Anlage an einer ersten Innenhülse 19, während die zweite Dichtung 18 in gleitbeweglicher Anlage an einer zweiten Innenhülse 20 ist. Beide Innenhülsen 19, 20 sind mittelbar oder unmittelbar, vorzugsweise drehfest, mit der Statoreinrichtung 3 bzw. dem Trägerbauteil 2, insbesondere dem Gehäuseträger, verbunden. Durch die Innenhülsen 19, 20, die Dichtungen 17, 18, den Deckel und die Außenhülse 10 wird ein Fettraum 16 abgegrenzt, in dem die Formfeder 14 des Wälzkörpergewindetriebs 11 angeordnet ist.

In radialer Richtung R außerhalb der Außenhülse 10 ist ein Ausrücklager 21 vorgesehen. Ein Innenring 22 des Ausrücklagers 21 ist drehfest auf der Außenhülse 10 angebracht, beispielsweise aufgepresst, kann jedoch auch einteilig mit der Außenhülse 10 ausgebildet sein. Ein Außenring 23 des Ausrücklagers 21 ist verdrehbar zum Innenring 22 ausgebildet und drehfest in einer Lagerhülse 24 aufgenommen, beispielsweise eingepresst, oder einteilig mit der Lagerhülse 24 ausgebildet. Die Lagerhülse 24 kann einen oder zwei Bundabschnitte aufweisen, die eine oder beide Stirnseiten des Ausrücklagers 21 zumindest teilweise überdecken. Das Ausrücklager 21 ist im dargestellten Ausführungsbeispiel als einreihiges Kugellager ausgebildet, kann beispielsweise jedoch auch als mehrreihiges Kugellager, Schrägkugellager, Kegelrollenlager, zylindrisches Rollenlager oder Gleitlager ausgebildet sein. Über die Außenhülse 10, das Ausrücklager 21 und die mit dem Ausrücklager 21 über die Lagerhülse 24 verbundene Zug- und Schubeinrichtung 25 wirkt die Schlitteneinrichtung 9 auf die in radialer Richtung R innen liegenden Zungen 49 des Hebelelements 48, um die Kupplung 36 auszurücken bzw. einzurücken. Hierfür können sowohl Zug- als auch Schubkräfte übertragen werden.

Der Wälzkörpergewindetrieb 11 ist vorzugsweise in radialer Richtung R zwischen der Rotoreinrichtung 5 und der Schlitteneinrichtung 9 angeordnet. Im dargestellten Ausführungsbeispiel umfasst die Formfeder 14 des Wälzkörpergewindetriebs 11 vierzehn Windungen, wobei prinzipiell jede Windungszahl größer/gleich drei möglich ist.

Zusätzlich zur Formfeder 14 weist der Wälzkörpergewindetrieb 11 einen Wälzkörperumlauf mit einer Wälzkörperrinne 13 auf, in der, vorzugsweise über den gesamten Umfang verteilt, Wälzkörper 12 in einer Reihe, oder gegebenenfalls auch in mehreren, in axialer Richtung A voneinander beabstandeten Reihen, angeordnet sind. Die Wälzkörperrinne 13 kann einerseits als separates Bauteil mit der Rotoreinrichtung 5, insbesondere dem Joch 7, verbunden sein, kann aber auch einteilig mit der Rotoreinrichtung 5 bzw. dem Joch 7 ausgebildet sein, wie dies in Figur 1 dargestellt ist. Insbesondere ist die Wälzkörperrinne 13 im Außenumfang der Rotoreinrichtung 5 bzw. des Jochs 7 ausgebildet, wenn der Antrieb der Betätigungsvorrichtung 1 mittels eines Außenläufers erfolgt. Wenn der Antrieb der Betätigungsvorrichtung 1 mittels eines Innenläufers erfolgt, ist es umgekehrt von Vorteil, wenn die Wälzkörperrinne 14 des Wälzkörperumlaufs im Innenumfang der Rotoreinrichtung 5 bzw. des Jochs 7 angeordnet ist.

Die Wälzkörper 12 laufen im Fettraum 16, der durch die Dichtungen 17, 18 in axialer Richtung A abgedichtet ist, und sind vorzugsweise als Kugeln ausgebildet. Jedoch ist es auch möglich, dass die Wälzkörper 12 als Nadeln ausgebildet sind bzw. eine Tonnen- oder Fassform aufweisen. Der Außenkontur der Wälzkörper 12 entsprechend weist die Formfeder 14 eine Anlagekontur auf, an der Oberflächenbereiche der Wälzkörper 12 anliegen. Dabei entspricht besagte Anlagekontur im Wesentlichen dem entsprechenden Oberflächenbereich des bzw. der Wälzkörper 12. Im dargestellten Ausführungsbeispiel weisen die Windungen der Formfeder 14 zwei in axialer Richtung A voneinander beabstandete Anlagekonturen auf, die durch einen dazwischen liegenden Kamm voneinander getrennt sind.

Die Formfeder 14 ist als innenkonturierte Formfeder 14 ausgebildet, da die Wälzkörper 12 in radialer Richtung R innerhalb der Formfeder 14 laufen. Umgekehrt ist es jedoch auch möglich, dass die Formfeder 14 bei Verwendung eines Innenläufers als außenkonturierte Formfeder 14 ausgebildet ist.

Die Wälzkörperrinne 13 des Wälzkörperumlaufs weist einen derart ausgebildeten, nicht dargestellten Spurwechselbereich auf, dass die Wälzkörper 12 in Umfangsrichtung vor dem Spurwechselbereich in einem Tragbereich der Wälzkörperrinne 13 und in axialer Richtung A zwischen einer ersten und einer zweiten Windung 15a, 15b der Formfeder 14 laufen, und die Wälzkörper 12 in Umfangsrichtung nach dem Spurwechselbereich im Tragbereich der Wälzkörperrinne 13 und in axialer Richtung A zwischen der zweiten und einer dritten Windung 15b, 15c der Formfeder 14 laufen. Zwischen der ersten und zweiten Windung 15a, 15b der Formfeder 14 ist somit eine erste Spur für die Wälzkörper 12 in Umfangsrichtung definiert, während zwischen der zweiten und dritten Windung 15b, 15c der Formfeder 14 eine zweite Spur für die Wälzkörper 12 in Umfangsrichtung definiert ist. An dieser Stelle sei darauf hingewiesen, dass die erste Windung 15a, die zweite Windung 15b und die dritte Windung 15c drei aufeinander folgende Windungen der Formfeder 14 darstellen, die in axialer Richtung A an beliebiger Stelle der Formfeder 14 ausgebildet sein können.

Je nach Position der Schlitteneinrichtung 9 überkreuzt sich die zweite Windung 15b mit dem Spurwechselbereich, wenn man die Betätigungsvorrichtung 1 von der Seite betrachtet. Dabei ist es von Vorteil, wenn die zweite Windung 15b den Spurwechselbereich ausschließlich im Bereich der größten, in radialer Richtung R zu bestimmenden Tiefe der Wälzkörperrinne 13 kreuzt. Der Spurwechselbereich weist in radialer Richtung R eine größere Tiefe als der Tragbereich auf. Der Tragbereich geht über einen Einlaufabschnitt in den Spurwechselbereich über, und der Spurwechselbereich geht über einen Auslaufabschnitt in den Tragbereich über. Die Tiefe der Wälzkörperrinne 13 in radialer Richtung R vergrößert sich im Einlaufabschnitt vom Tragbereich zum Spurwechselbereich kontinuierlich. Die Tiefe der Wälzkörperrinne 13 in radialer Richtung R verringert sich im Auslaufabschnitt vom Spurwechselbereich zum Tragbereich kontinuierlich.

Der Tragbereich der Wälzkörperrinne 13 ist im Wesentlichen schraubengewindeförmig ausgebildet. Die Steigung des Tragbereichs entspricht im Wesentlichen der Steigung der Formfeder 14 in diesem Bereich, genauer gesagt der Steigung der Spur zwischen der ersten und zweiten Windung 15a, 15b und zwischen der zweiten und dritten Windung 15b, 15c der Formfeder 14.

Die Wälzkörperrinne 13 ist im Einlaufabschnitt, der in Umfangsrichtung vor dem Spurwechselbereich ausgebildet ist, derart ausgebildet, dass die Wälzkörper 12 während ihres Abtauchens in den Spurwechselbereich sowohl durch die erste Windung 15a, als auch durch die zweite Windung 15b der Formfeder 14 geführt sind. Ferner ist die Wälzkörperrinne 13 im Auslaufabschnitt, der in Umfangsrichtung nach dem Spurwechselbereich angeordnet ist, derart ausgebildet, dass die Wälzkörper 12 während ihres Auftauchens aus dem Spurwechselbereich sowohl durch die zweite Windung 15b, als auch durch die dritte Windung 15c der Formfeder 14 geführt sind.

Der Spurwechselbereich bildet von einem Ende des Einlaufabschnitts in axialer Richtung A einen Rücksprung an einen Anfang des Auslaufabschnitts aus. Der Tragbereich ist in axialer Richtung A vollständig zwischen einem Anfang des Spurwechselbereichs und einem Ende des Spurwechselbereichs angeordnet. Somit springt der Spurwechselbereich in axialer Richtung A insbesondere vor einen Anfang des Tragbereichs zurück.

Die Steigung des Spurwechselbereichs ist betragsmäßig größer als die Steigung des Tragbereichs, so dass sich der Spurwechselbereich in Umfangsrichtung über einen kürzeren Segmentbereich des Wälzkörperumlaufs erstreckt als der Tragbereich. Die Steigung des Einlaufabschnitts ist größer als die Steigung des Tragbereichs. Ferner ist die Steigung des Auslaufabschnitts größer als die Steigung des Tragbereichs. Insbesondere ist die Steigung des Tragbereichs gleichmäßig, während vorzugsweise auch die Steigung des Einlaufabschnitts und des Auslaufabschnitts, sowie die Steigung des Tragbereichs jeweils gleichmäßig ist.

Wie bereits zuvor erwähnt, sind die Wälzkörper 12 vorzugsweise als Kugeln ausgebildet. Die Wälzkörperrinne 13 ist vorzugsweise als umlaufende Kugelrinne ausgebildet. Im Spurwechselbereich ist sicherzustellen, dass die Wälzkörper 12, das heißt die Kugeln, in radialer Richtung R unter dem Kamm der zweiten Windung 15b der Formfeder 14 hindurchtauchen können, um den Spurwechsel von der einen Spur zwischen der ersten und zweiten Windung 15a, 15b zur anderen Spur zwischen der zweiten und dritten Windung 15b, 15c zu vollziehen. Hierzu ist es von Vorteil, wenn die maximale Tiefe des Spurwechselbereichs beim Kreuzen der zweiten Windung 15b der Formfeder 14 im Wesentlichen gleich dem Durchmesser der Kugeln ist. Vorzugsweise ist die maximale Tiefe des Spurwechselbereichs größer als der Durchmesser der Kugeln, damit diese vollständig in die Kugelrinne eintauchen können und den Kamm der zweiten Windung 15b der Formfeder 14 mit Sicherheit nicht berühren.

Im Betrieb der Betätigungsvorrichtung 1 führt eine Drehung der Rotoreinrichtung 5 durch entsprechende Bestromung der Statoreinrichtung 3 zu einer Drehung des Wälzkörperumlaufs bzw. der Wälzkörperrinne 13 um die Drehachse Z der Betätigungsvorrichtung 1 bzw. der Kupplung 36. Die Wälzkörper 12 durchlaufen innerhalb des Wälzkörpergewindetriebs 11 die Spuren zwischen der ersten und zweiten Windung 15a, 15b der Formfeder 14 und zwischen der zweiten und dritten Windung 15b, 15c der Formfeder 14, während die Wälzkörper 12 in der Wälzkörperrinne 13 umlaufen, wodurch sich die Spuren in axialer Richtung A bewegen, und die rotatorische Bewegung der Rotoreinrichtung 5 in eine translatorische Bewegung der Schlitteneinrichtung 9, in der die Formfeder 14 axial fest gelagert ist, umgesetzt wird. Die translatorische Bewegung der Schlitteneinrichtung 9 kann zur mittelbaren oder unmittelbaren Betätigung der Kupplung 36 verwendet werden. Durch ihren Aufbau ist die Betätigungsvorrichtung 1 in der Lage, sowohl Zugkräfte als auch Schubkräfte zu übertragen.

Da der Wälzkörpergewindetrieb 11 vorzugsweise selbsthemmend ausgebildet ist, ist eine Bestromung der Statoreinrichtung 3 vorzugsweise lediglich erforderlich, wenn der Betriebszustand der Kupplung 36 zu ändern ist. Die Bestromung kann in beide Drehrichtungen der Rotoreinrichtung 5 erfolgen, wobei in einer Drehrichtung die Kupplung 36 eingerückt wird und in der entgegengesetzten Drehrichtung die Kupplung 36 ausgerückt wird. Bei einer mitdrehenden Statoreinrichtung 3 sind jedoch auch andere Arten der Bestromung möglich.

Um sowohl Zugkräfte, als auch Schubkräfte auf die Zungen 49 des im Wesentlichen ringförmig ausgebildeten Hebelelements 48 übertragen zu können, weist die Zug- und Schubeinrichtung 25 sowohl ein im Wesentlichen ringförmiges Zugelement 28, als auch ein im Wesentlichen ringförmiges Schubelement 26 auf. Die Zungen 49 des Hebelelements 48 sind in axialer Richtung A zwischen dem Schubelement 26 und dem Zugelement 28 angeordnet. Das Schubelement 26 und das Zugelement 28 sind derart angeordnet, dass bei Betätigung der Betätigungsvorrichtung 1 die Zungen 49 des Hebelelements 48 mit dem Schubelement 26 und dem Zugelement 28 abwechselnd und vorzugsweise nicht gleichzeitig in Anlage bringbar sind. Hierzu sind das Schubelement 26 und das Zugelement 28 durch Schraube-Hülse-Verbindungen 29, 32 in axialer Richtung A voneinander beabstandet und miteinander verbunden. Vorzugsweise erfolgt die Verbindung mittels mehrerer in Umfangsrichtung verteilt angeordneter Schraube-Hülse-Verbindungen 29, 32 lösbar, das heißt insbesondere zerstörungsfrei lösbar.

Die Zug- und Schubeinrichtung 25, genauer gesagt das Schubelement 26 und das Zugelement 28, sind in axialer Richtung A zwischen dem Ausrücklager 21 und dem Zentralflansch 39 angeordnet. Der Zentralflansch 39 ist in axialer Richtung A zwischen der Zug- und Schubeinrichtung 25 und der Gegendruckplatte 46, genauer gesagt zwischen der Zug- und Schubeinrichtung 25 und der eigentlichen Anpressplatte 43 ohne die Anpressplattennocken 44 angeordnet. Das Zugelement 28 ist in axialer Richtung A näher am Zentralflansch 39 angeordnet als das Schubelement 26.

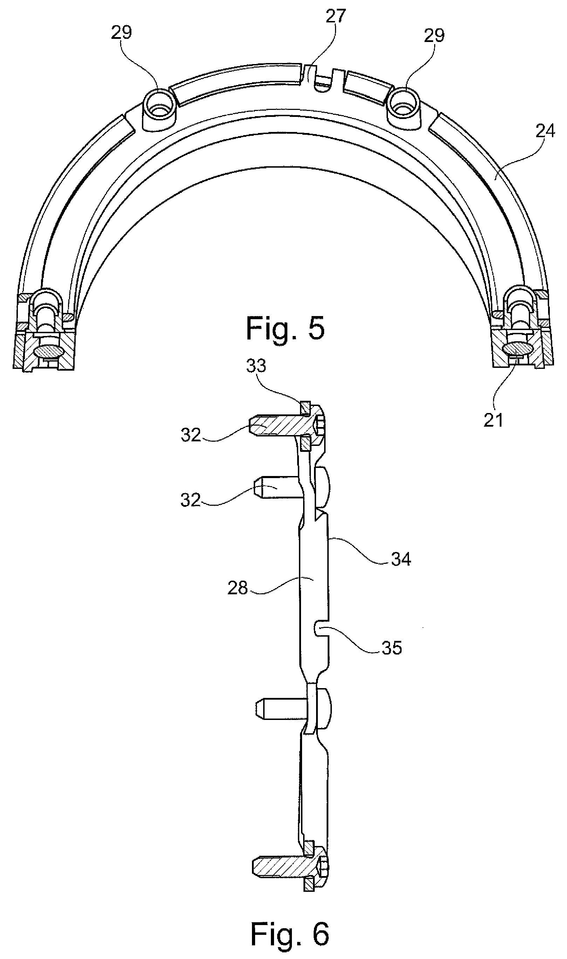

Jede der in Umfangsrichtung verteilt angeordneten Schraube-Hülse-Verbindungen 29, 32 weist eine Schraube 32 und eine Hülse 29, die insbesondere als Gewindehülse ausgebildet ist, auf. Im dargestellten Ausführungsbeispiel sind die Hülsen 29 am Schubelement 26 vorgesehen, das heißt in das Schubelement 26 eingelassen oder einteilig mit dem Schubelement 26 ausgebildet, während die Schrauben 32 am Zugelement 28 vorgesehen sind und dort insbesondere im unmontierten Zustand des Zugelements 28, der in Figur 6 dargestellt ist, mittels Montagesicherungen 33 verliersicher gehalten sind. Prinzipiell ist jedoch auch ein umgekehrter Aufbau möglich, nämlich die insbesondere als Gewindestifte ausgebildeten Schrauben 32 am Schubelement 26 vorzusehen und die insbesondere mit einer Eingriffsöffnung für ein Werkzeug ausgestatteten Hülsen 29 verliersicher am Zugelement 28 vorzusehen.

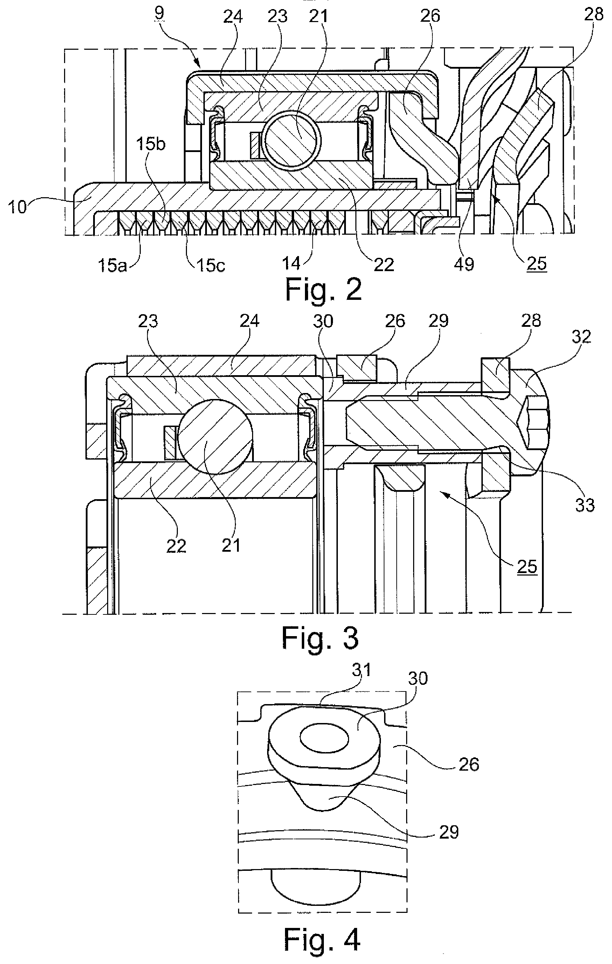

Wie insbesondere aus den Figuren 3 und 4 ersichtlich, weist jede der Hülsen 29 an ihrem rückwärtigen Ende einen Bundabschnitt 30 auf, der in axialer Richtung A zwischen der kupplungsseitigen Stirnseite des Ausrücklagers 21 und der rückwärtigen Seite des Schubelements 26 angeordnet ist. Da das Schubelement 26 durch einen Flansch der Lagerhülse 24 in Position gehalten wird, kann die jeweilige Hülse 29 zwischen dem Außenring 23 des Ausrücklagers 21 und im Schubelement 26 in axialer Richtung A festgehalten werden. Um ein Verdrehen der Hülse 29 beim Verschrauben zu verhindern, weist die Hülse 29, genauer gesagt der Bundabschnitt 30 der Hülse 29, vorzugsweise zumindest eine Verdrehsicherung 31 auf. Wie in Figur 4 dargestellt, ist die Verdrehsicherung vorzugsweise als abgeflachte Oberfläche in der ansonsten runden Mantelfläche des Bundabschnitts 30 ausgebildet und mit einer entsprechenden Gegenfläche des Schubelements 26 in Anlage.

Das Schubelement 26 verfügt über zumindest ein Zentriermittel 27, um in Umfangsrichtung eine festgelegte Orientierung zur Lagerhülse 24 zu ermöglichen. Wie in Figur 5 dargestellt, ist das Zentriermittel 27 vorzugsweise als Radialvorsprung am Schubelement 26 ausgebildet, der in eine entsprechende Aussparung der Lagerhülse 24 eingreift. Jedoch sind auch andere Ausgestaltungen des Zentriermittels 27 möglich.

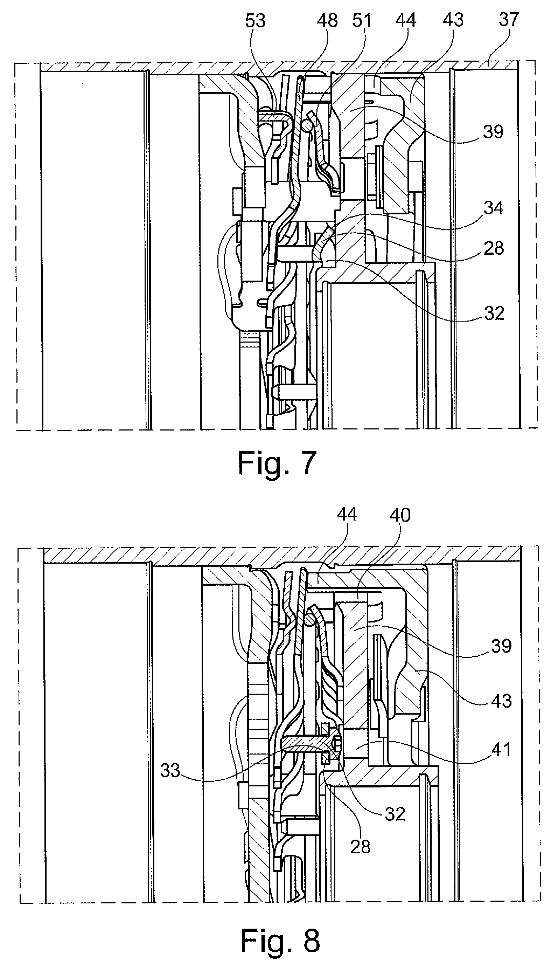

Um eine Montage einer vormontierten, beispielsweise in den Figuren 7 und 8 dargestellten Kupplungsbaugruppe mit einer vormontierten Betätigungsvorrichtung 1 zu ermöglichen, weist der Zentralflansch 39 mehrere in Umfangsrichtung verteilt angeordnete Durchgriffsöffnungen 41 auf, durch die das Schubelement 26 und das Zugelement 28 miteinander montiert werden können. Die Durchgriffsöffnungen 41 sind im Wesentlichen auf demselben Radius angeordnet, wie die im Zugelement 28 verliersicher gehaltenen Schrauben 32.

Um in Umfangsrichtung eine Ausrichtung des Zugelements 28 zum Schubelement 26 vor der Montage zu ermöglichen, weist der Zentralflansch 29 mehrere in Umfangsrichtung verteilt angeordnete Positionierungsöffnungen auf, durch die das Schubelement 26 und das Zugelement 28 relativ zueinander positioniert werden können. Gleichermaßen weist das Zugelement 28 Positionierungsöffnungen 35 auf, um von einem Positionierungswerkzeug, das durch die Positionierungsöffnungen im Zentralflansch 39 eingeführt wird, relativ zum Schubelement 26 verdreht werden zu können. Entsprechende Positionierungsöffnungen können zusätzlich auch am Schubelement 26, beispielsweise im Bereich des Zentriermittels 27 vorgesehen sein, um während der Verschraubung die deckungsgleiche Orientierung von Schubelement 26 und Zugelement 28 zu gewährleisten. Sämtliche Positionierungsöffnungen sind vorzugsweise als Langlöcher ausgebildet, wobei die Positionierungsöffnungen im Zentralflansch 39 insbesondere vorzugsweise als kreisbogensegmentförmige Langlöcher ausgebildet sind. Ferner sind sämtliche Positionierungsöffnungen vorzugsweise auf demselben Radius angeordnet.

Im Zentralflansch 39 sind die Durchgriffsöffnungen 41 für die Verschraubung und die Positionierungsöffnungen in Umfangsrichtung verteilt angeordnet, vorzugsweise abwechselnd verteilt angeordnet. Die Durchgriffsöffnungen 41 für die Verschraubung sind vorzugsweise auf einem anderen Radius angeordnet als die Positionierungsöffnungen, um eine Kollision des Werkzeugs für die Aufrechterhaltung der Positionierung und des Werkzeugs für die Verschraubung des Zugelements 28 mit dem Schubelement 26 zu verhindern.

Für die Montage der Kupplung 36 mit der Betätigungsvorrichtung 1 ist es daher zweckmäßig, die zuvor beschriebene Betätigungsvorrichtung 1 vorzumontieren, das heißt als Unterbaugruppe auszubilden. Die vormontierte Betätigungsvorrichtung 1 beinhaltet das Schubelement 26 der Zug- und Schubeinrichtung 25 mit den vormontierten Hülsen 29, wobei das Schubelement 26 mittels der Lagerhülse 24 am Ausrücklager 21 befestigt ist. Die Schlitteneinrichtung 9 befindet sich vorzugsweise in einer zurückgezogenen Axialposition, so dass die Zungen 49 des Hebelements 48 weder am Schubelement 26 anliegen können, noch mit den Hülsen 29 kollidieren können. Mit Bezug auf Figur 1 bedeutet dies, dass die Schlitteneinrichtung 9 in axialer Richtung A möglichst weit nach links verfahren ist.

Bei der vormontierten Baugruppe der Kupplung 36, das heißt der weiteren Unterbaugruppe, wird das Zugelement 28 mit seinen verliersicher vormontierten Schrauben 32 in axialer Richtung A zwischen dem Hebelelement 48 und dem Zentralflansch 39 der Kupplung 36 angelegt. Mittels seiner Anlagebereiche 34 liegt der Zentralflansch in diesem Zustand an der dem Hebelelement 48 zugewandten Oberfläche des Zentralflansches 39 an.

Anschließend wird die vormontierte Betätigungsvorrichtung 1, die die Schlitteneinrichtung 9 aufweist, in den Zentralflansch 39 der vormontierten Baugruppe der Kupplung 36 unter Vermittlung des Zentrallagers 42 eingepresst. Prinzipiell ist es dabei möglich, dass das Zentrallager 42 bereits auf das Trägerbauteil 2 der Betätigungsvorrichtung 1 aufgepresst ist, oder dass das Zentrallager 42 bereits in den Zentralflansch 39 eingepresst ist, oder dass das Zentrallager 42 erst zwischen das Trägerbauteil 2 und dem Zentralflansch 39 eingepresst wird, nachdem die vormontierte Betätigungsvorrichtung 1 und die vormontierte Baugruppe der Kupplung 36 axial fest zueinander positioniert sind.

Sollten die schubelementseitigen Hülsen 29 und die zugelementseitigen Schrauben 32 nicht deckungsgleich sein, können Zugelement 28 und Schubelement 26 mittels ihrer Positionierungsöffnungen 35 und gegebenenfalls der Zentriermittel 27 durch die im Zentralflansch 39 vorgesehenen Positionierungsöffnungen hindurch relativ zueinander positioniert werden. Anschließend erfolgt das Verschrauben des Zugelements 28 mit dem Schubelement 26 in axialer Richtung A durch die im Zentralflansch 39 vorgesehenen Durchgriffsöffnungen 41 mittels eines entsprechenden Verschraubungswerkzeugs.

Die vorangegangenen Ausführungsbeispiele betreffen eine Betätigungsvorrichtung 1 für eine Kupplung 36 mit einer Statoreinrichtung 3, einer bezüglich der Statoreinrichtung 3 verdrehbaren Rotoreinrichtung 5 und einer bezüglich der Rotoreinrichtung 5 in axialer Richtung A begrenzt verlagerbaren, Zug- und Schubkräfte aufbringenden Schlitteneinrichtung 9, die sich mit einer Zug- und Schubeinrichtung 25 in Wirkverbindung befindet, die ausgebildet ist, auf ein Hebelelement 48 der Kupplung 36 Zug- und Schubkräfte aufzubringen, wobei die Zug- und Schubeinrichtung 25 zumindest ein Zugelement 28 und zumindest ein Schubelement 26 aufweist, zwischen denen das Hebelelement 48 aufnehmbar ist, und die miteinander verbindbar sind.

Darüber hinaus betreffen die vorangegangenen Ausführungsbeispiele eine Kupplung 36 mit einer Gegendruckplatte 46, einer in axialer Richtung A begrenzt verlagerbaren Anpressplatte 43 zur reibschlüssigen Klemmung einer Kupplungsscheibe 47 zwischen der Anpressplatte 43 und der Gegendruckplatte 46, einem auf die Anpressplatte 43 wirkenden Hebelelement 48 zur Verlagerung der Anpressplatte 43 in axialer Richtung A und einer Betätigungsvorrichtung 1 nach zumindest einem der vorangegangenen Ausführungsbeispiele, die sich mit dem Hebelelement 48 in Wirkverbindung befindet.

Ferner betreffen die vorangegangenen Ausführungsbeispiele ein elektrisches Fahrmodul, insbesondere ein Hybridmodul für ein Hybridfahrzeug, mit einem elektrischen Fahrmotor, in dessen Rotor eine Kupplung 36 nach zumindest einem der vorangegangenen Ausführungsbeispielen integriert ist, wobei insbesondere der Rotor des Fahrmotors als Gehäusebauteil 37 der Kupplung 36 ausgebildet und drehfest mit dem Zentralflansch 39 verbunden ist.

Zusätzlich betreffen die vorangegangenen Ausführungsbeispiele ein Verfahren zur Montage einer Kupplung 36 mit einer Betätigungsvorrichtung 1, insbesondere einer Zuschaltkupplung zum Zu- und Abkoppeln eines Verbrennungsmotors an einen und von einem Antriebsstrang eines Hybridfahrzeugs, wobei die Betätigungsvorrichtung 1 ausgebildet ist, über eine in axialer Richtung A begrenzt verlagerbare Zug- und Schubeinrichtung 25 Zug- und Schubkräfte auf ein Hebelelement 48 der Kupplung 36 aufzubringen, mit den folgenden Schritten:
Vormontage eines Schubelements 26 der Zug- und Schubeinrichtung 25 mit vormontierten Hülsen 29 an einem der Schlitteneinrichtung 9 zugeordneten Ausrücklager 21,

Einlegen eines Zugelements 28 mit vormontierten Schrauben 32 zwischen dem Hebelelement 48 und einem Zentralflansch 39 der Kupplung 36,

Einpressen der vormontierten Betätigungsvorrichtung 1 mit der Schlitteneinrichtung 9 in den Zentralflansch 39 der Kupplung 36 unter Vermittlung eines Zentrallagers 46, und

Verschrauben des Zugelements 28 mit dem Schubelement 26 in axialer Richtung A, insbesondere durch Durchgriffsöffnungen 41 im Zentralflansch 39.

### Bezugszeichenliste

- 1: Betätigungsvorrichtung
- 2: Trägerbauteil
- 3: Statoreinrichtung
- 4: Stromzufuhr
- 5: Rotoreinrichtung
- 6: Magnet
- 7: Joch
- 8: Stützlager
- 9: Schlitteneinrichtung
- 10: Außenhülse
- 11: Wälzkörpergewindetrieb
- 12: Wälzkörper
- 13: Wälzkörperrinne
- 14: Formfeder
- 15a: erste Windung
- 15b: zweite Windung
- 15c: dritte Windung
- 16: Fettraum
- 17: erste Dichtung
- 18: zweite Dichtung
- 19: erste Innenhülse
- 20: zweite Innenhülse
- 21: Ausrücklager
- 22: Innenring
- 23: Außenring
- 24: Lagerhülse
- 25: Zug- und Schubeinrichtung
- 26: Schubelement
- 27: Zentriermittel
- 28: Zugelement
- 29: Gewindehülse
- 30: Bundabschnitt
- 31: Verdrehsicherung
- 32: Schraube
- 33: Montagesicherung
- 34: Anlagebereich
- 35: Positionierungsöffnung
- 36: Kupplung
- 37: Gehäusebauteil
- 38: Deckelbauteil
- 39: Zentralflansch
- 40: Aussparung
- 41: Durchgriffsöffnung
- 42: Zentrallager
- 43: Anpressplatte
- 44: Anpressplattennocken
- 45: Blattfeder
- 46: Gegendruckplatte
- 47: Kupplungsscheibe
- 48: Hebelelement
- 49: Zunge
- 50: Verschleißnachstelleinrichtung
- 51: Sensorfeder
- 52: Drahtring
- 53: Verstellring
- A: axiale Richtung
- R: radiale Richtung
- Z: Drehachse

## Patentansprüche

1. Kupplung (36), die aufweist:
eine Gegendruckplatte (46),
eine in axialer Richtung (A) begrenzt verlagerbare Anpressplatte (43) zur reibschlüssigen Klemmung einer Kupplungsscheibe (47) zwischen der Anpressplatte (43) und der Gegendruckplatte (46),
ein auf die Anpressplatte (43) wirkendes Hebelelement (48) zur Verlagerung der Anpressplatte (43) in axialer Richtung (A), und
eine Betätigungsvorrichtung (1) mit einer Statoreinrichtung (3), einer bezüglich der Statoreinrichtung (3) verdrehbaren Rotoreinrichtung (5) und einer bezüglich der Rotoreinrichtung (5) in axialer Richtung (A) begrenzt verlagerbaren, Zug- und Schubkräfte aufbringenden Schlitteneinrichtung (9), die sich mit einer Zug- und Schubeinrichtung (25) in Wirkverbindung befindet, die ausgebildet ist, auf ein Hebelelement (48) der Kupplung (36) Zug- und Schubkräfte aufzubringen, wobei die Zug- und Schubeinrichtung (25) zumindest ein Zugelement (28) und zumindest ein Schubelement (26) aufweist, zwischen denen das Hebelelement (48) aufnehmbar ist und die miteinander verbindbar sind,
**dadurch gekennzeichnet, dass**
das Schubelement (26) und das Zugelement (28) derart angeordnet sind, dass bei Betätigung der Betätigungsvorrichtung (1) Zungen (49) des Hebelelements (48) mit dem Schubelement (26) und dem Zugelement (28) abwechselnd in Anlage bringbar sind.

2. Kupplung (36) nach Anspruch 1, wobei das Zugelement (28) und das Schubelement (26) mittels mehrerer in Umfangsrichtung verteilt angeordneter Schraube-Hülse-Verbindungen (29, 32) lösbar miteinander verbunden sind.

3. Kupplung (36) nach Anspruch 2, wobei das Schubelement (26) unter axialer Zwischenlage von Bundabschnitten (30) der Schrauben (32) oder Hülsen (29) der Schraube-Hülse-Verbindungen (29, 32) axialfest mit einem der Schlitteneinrichtung (9) zugeordneten Ausrücklager (21) und drehfest mit einem Außenring (23) des Ausrücklagers (21) verbunden ist.

4. Kupplung (36) nach einem der Ansprüche 1 bis 3, wobei
zwischen der Rotoreinrichtung (5) und der Schlitteneinrichtung (9) ein Wälzkörpergewindetrieb (11) mit zumindest drei Windungen (15a, 15b, 15c) und einem Wälzkörperumlauf mit in einer Wälzkörperrinne (13) laufenden Wälzkörpern (12) vorgesehen ist, und
die Wälzkörperrinne (13) einen derart ausgebildeten Spurwechselbereich aufweist, dass Wälzkörper (12) vor dem Spurwechselbereich in Umfangsrichtung zwischen einer ersten und einer zweiten Windung (15a, 15b) laufen und Wälzkörper (12) nach dem Spurwechselbereich in Umfangsrichtung zwischen der zweiten und einer dritten Windung (15b, 15c) laufen.

5. Kupplung (36) nach einem der Ansprüche 1 bis 4, wobei das Hebelelement (48) ringförmig ausgebildet ist und die Zungen (49) des Hebelelements (48) in axialer Richtung (A) zwischen dem Schubelement (26) und dem Zugelement (28) angeordnet sind.

6. Kupplung (36) nach einem der Ansprüche 1 bis 5, wobei in axialer Richtung (A) zwischen der Zug- und Schubeinrichtung (25) und der Gegendruckplatte (46) ein Zentralflansch (39) angeordnet ist, der drehfest mit einem Gehäusebauteil (37) der Kupplung (36) verbunden ist.

7. Kupplung (36) nach Anspruch 6, wobei das Zugelement (28) in axialer Richtung (A) näher an dem Zentralflansch (39) angeordnet ist als das Schubelement (26).

8. Kupplung (36) nach Anspruch 6 oder 7, wobei der Zentralflansch (39) zumindest eine Durchgriffsöffnung (41) aufweist, durch die das Schubelement (26) und das Zugelement (28) miteinander montierbar sind.

9. Kupplung (36) nach einem der Ansprüche 6 bis 8, wobei der Zentralflansch (39) zumindest eine Positionierungsöffnung aufweist, durch die das Schubelement (26) und das Zugelement (28) relativ zueinander positionierbar sind.

10. Kupplung (36) nach Anspruch 8 oder 9, wobei in dem Zentralflansch (39) mehrere Durchgriffsöffnungen (41) und mehrere Positionierungsöffnungen in Umfangsrichtung verteilt angeordnet sind, und die Durchgriffsöffnungen (41) vorzugsweise auf einem anderen Radius angeordnet sind als die Positionierungsöffnungen.

11. Kupplung (36) nach einem der Ansprüche 6 bis 10, wobei das Zugelement (28) Positionierungsöffnungen (35) aufweist, die bei der Montage ein Verdrehen des Zugelements (28) relativ zu dem Schubelement (26) ermöglichen.

12. Verfahren zur Montage einer Kupplung (36) mit einer Betätigungsvorrichtung (1), wobei die Betätigungsvorrichtung (1) ausgebildet ist, über eine in axialer Richtung (A) begrenzt verlagerbare Zug- und Schubeinrichtung (25) Zug- und Schubkräfte auf ein Hebelelement (48) der Kupplung (36) aufzubringen, mit den folgenden Schritten:
Vormontieren eines Schubelements (26) der Zug- und Schubeinrichtung (25) mit vormontierten Hülsen (29) an einem einer Schlitteneinrichtung (9) zugeordneten Ausrücklager (21),
Einlegen eines Zugelements (28) mit vormontierten Schrauben (32) zwischen dem Hebelelement (48) und einem Zentralflansch (39) der Kupplung (36),
Einpressen der vormontierten Betätigungsvorrichtung (1) mit der Schlitteneinrichtung (9) in den Zentralflansch (39) der Kupplung (36) unter Vermittlung eines Zentrallagers (42), und
Verschrauben des Zugelements (28) mit dem Schubelement (26) in axialer Richtung (A).

## Claims

1. Clutch (36) which has:
a counterpressure plate (46),
a pressure plate (43) which can be displaced to a limited extent in the axial direction (A) for clamping a clutch plate (47) in a frictionally locking manner between the pressure plate (43) and the counterpressure plate (46),
a lever element (48) which acts on the pressure plate (43) in order to displace the pressure plate (43) in the axial direction (A), and
an actuating apparatus (1) with a stator device (3), a rotor device (5) which can be rotated with regard to the stator device (3), and a slide device (9) which can be displaced to a limited extent in the axial direction (A) with regard to the rotor device (5), which produces pulling and pushing forces, and is in an operative connection with a pulling and pushing device (25) which is configured for applying pulling and pushing forces to a lever element (48) of the clutch (36), the pulling and pushing device (25) having at least one pulling element (28) and at least one pushing element (26), between which the lever element (48) can be received and which can be connected to one another,
**characterized in that**
the pushing element (26) and the pulling element (28) are arranged in such a way that, upon actuation of the actuating apparatus (1), tongues (49) of the lever element (48) can be brought into contact in an alternating manner with the pushing element (26) and the pulling element (28).

2. Clutch (36) according to Claim 1, the pulling element (28) and the pushing element (26) being connected releasably to one another by means of a plurality of screw/sleeve connections (29, 32) which are arranged distributed in the circumferential direction.

3. Clutch (36) according to Claim 2, the pushing element (26) being connected, with the axial interposition of collar sections (30) of the screws (32) or sleeves (29) of the screw/sleeve connections (29, 32), in an axially fixed manner to a release bearing (21) which is assigned to the slide device (9) and in a fixed manner to an outer ring (23) of the release bearing (21) so as to rotate with it.

4. Clutch (36) according to one of Claims 1 to 3,
a rolling-body screw drive (11) having at least three turns (15a, 15b, 15c) and a rolling-body circulation means with rolling bodies (12) which run in a rolling-body channel (13) being provided between the rotor device (5) and the slide device (9), and
the rolling-body channel (13) having a lane change region which is configured in such a way that rolling bodies (12) upstream of the lane change region run in the circumferential direction between a first and a second turn (15a, 15b) and rolling bodies (12) downstream of the lane change region run in the circumferential direction between the second and a third turn (15b, 15c).

5. Clutch (36) according to one of Claims 1 to 4, the lever element (48) being of annular configuration, and the tongues (49) of the lever element (48) being arranged in the axial direction (A) between the pushing element (26) and the pulling element (28).

6. Clutch (36) according to one of Claims 1 to 5, a central flange (39) which is connected fixedly to a housing component (37) of the clutch (36) so as to rotate with it being arranged in the axial direction (A) between the pulling and pushing device (25) and the counterpressure plate (46).

7. Clutch (36) according to Claim 6, the pulling element (28) being arranged closer to the central flange (39) in the axial direction (A) than the pushing element (26).

8. Clutch (36) according to Claim 6 or 7, the central flange (39) having at least one access opening (41), through which the pushing element (26) and the pulling element (28) can be assembled with one another.

9. Clutch (36) according to one of Claims 6 to 8, the central flange (39) having at least one positioning opening, through which the pushing element (26) and the pulling element (28) can be positioned relative to one another.

10. Clutch (36) according to Claim 8 or 9, a plurality of access openings (41) and a plurality of positioning openings being arranged in the central flange (39) in a manner which is distributed in the circumferential direction, and the access openings (41) preferably being arranged on a different radius to the positioning openings.

11. Clutch (36) according to one of Claims 6 to 10, the pulling element (28) having positioning openings (35) which make a rotation of the pulling element (28) relative to the pushing element (26) possible during assembly.

12. Method for assembling a clutch (36) having an actuating apparatus (1), the actuating apparatus (1) being configured to apply pulling and pushing forces to a lever element (48) of the clutch (36) via a pulling and pushing device (25) which can be displaced to a limited extent in the axial direction (A), having the following steps:
pre-mounting of a pushing element (26) of the pulling and pushing device (25) with pre-mounted sleeves (29) on a release bearing (21) which is assigned to a slide device (9),
inserting of a pulling element (28) with pre-mounted screws (32) between the lever element (48) and a central flange (39) of the clutch (36),
pressing of the pre-mounted actuating apparatus (1) with the slide device (9) into the central flange (39) of the clutch (36) via a central bearing (42), and
screwing of the pulling element (28) to the pushing element (26) in the axial direction (A).

## Revendications

1. Embrayage (36), comportant :
une plaque de contre-pression (46) ;
une plaque de compression (43) pouvant être déplacée de façon limitée dans la direction axiale (A) pour serrer par complémentarité de frottements un disque d'embrayage (47) entre la plaque de compression (43) et
la plaque de contre-pression (46) ;
un élément de levier (48) agissant sur la plaque de compression (43) pour déplacer la plaque de compression (43) dans la direction axiale (A) ; et
un dispositif d'actionnement (1) avec un dispositif de stator (3), un dispositif de rotor (5) pouvant tourner par rapport au dispositif de stator (3) et un dispositif de coulisseau (9) pouvant être déplacé de façon limitée dans la direction axiale (A) par rapport au dispositif de rotor (5), appliquant des forces de traction et de poussée et se trouvant en liaison active avec un dispositif de traction et de poussée (25) réalisé pour appliquer des forces de traction et de poussée sur un élément de levier (48) de l'embrayage (36), le dispositif de traction et de poussée (25) comportant au moins un élément de traction (28) et au moins un élément de poussée (26) pouvant être reliés entre eux et entre lesquels l'élément de levier (48) peut être logé ;
**caractérisé en ce que** :
l'élément de poussée (26) et l'élément de traction (28) sont disposés de telle sorte que lors de l'actionnement du dispositif d'actionnement (1), les languettes (49) de l'élément de levier (48) peuvent être amenées alternativement en appui contre l'élément de poussée (26) et l'élément de traction (28).

2. Embrayage (36) selon la revendication 1, l'élément de traction (28) et l'élément de poussée (26) étant reliés l'un à l'autre à l'aide de plusieurs liaisons à vis-douille (29, 32) disposées de façon répartie dans la direction périphérique.

3. Embrayage (36) selon la revendication 2, l'élément de poussée (26) étant relié, par interposition axiale de sections de collier (30) des vis (32) ou des douilles (29) des liaisons à vis-douille (29, 32), fixement dans le plan axial à un palier de débrayage (21) associé au dispositif de coulisseau (9) et solidairement en rotation à une bague extérieure (23) du palier de débrayage (21).

4. Embrayage (36) selon l'une quelconque des revendications 1 à 3 :
un entraînement fileté de rouleau (11) avec au moins trois spires (15a, 15b, 15c) et avec une rotation de rouleau avec des rouleaux (12) tournant dans une rigole de rouleau (13) étant prévu entre le dispositif de rotor (5) et le dispositif de coulisseau (9) ; et
la rigole de rouleau (13) comportant une zone de changement de sillon réalisée de telle sorte que les rouleaux (12) tournent avant la zone de changement de sillon dans la direction périphérique entre une première et une deuxième spire (15a, 15b) et que les rouleaux (12) tournent après la zone de changement de sillon dans la direction périphérique entre la deuxième et une troisième spire (15b, 15c).

5. Embrayage (36) selon l'une quelconque des revendications 1 à 4, l'élément de levier (48) étant réalisé en forme de bague et les languettes (49) de l'élément de levier (48) étant disposées dans la direction axiale (A) entre l'élément de poussée (26) et l'élément de traction (28).

6. Embrayage (36) selon l'une quelconque des revendications 1 à 5, un flasque central (39) étant disposé dans la direction axiale (A) entre le dispositif de traction et de poussée (25) et la plaque de contre-pression (46), ledit flasque étant relié solidairement en rotation avec le composant de carter (37) de l'embrayage (36).

7. Embrayage (36) selon la revendication 6, l'élément de traction (28) étant disposé plus près dans la direction axiale (A) du flasque central (39) que de l'élément de poussée (26).

8. Embrayage (36) selon la revendication 6 ou 7, le flasque central (39) comportant au moins une ouverture de préhension (41) à travers laquelle l'élément de poussée (26) et l'élément de traction (28) peuvent être montés l'un à l'autre.

9. Embrayage (36) selon l'une quelconque des revendications 6 à 8, le flasque central (39) comportant au moins une ouverture de positionnement à travers laquelle l'élément de poussée (26) et l'élément de traction (28) peuvent être positionnés l'un par rapport à l'autre.

10. Embrayage (36) selon la revendication 8 ou 9, plusieurs ouvertures de préhension (41) et plusieurs ouvertures de positionnement étant disposées de façon répartie dans la direction périphérique dans le flasque central (39) et les ouvertures de préhension (41) étant de préférence disposées sur un autre rayon que les ouvertures de positionnement.

11. Embrayage (36) selon l'une quelconque des revendications 6 à 10, l'élément de traction (28) comportant des ouvertures de positionnement (35) permettant lors du montage une rotation de l'élément de traction (28) par rapport à l'élément de poussée (26).

12. Procédé de montage d'un embrayage (36) avec un dispositif d'actionnement (1), le dispositif d'actionnement (1) étant réalisé pour appliquer, via un dispositif de traction et de poussée (25) pouvant être déplacé de façon limitée dans la direction axiale (A), des forces de traction et de poussée sur un élément de levier (48) de l'embrayage (36), avec les étapes suivantes :
prémontage d'un élément de poussée (26) du dispositif de traction et de poussée (25) avec des douilles (29) prémontées à un palier de débrayage (21) associé à un dispositif de coulisseau (9) ;
insertion d'un élément de traction (28) avec des vis (32) prémontées entre l'élément de levier (48) et un flasque central (39) de l'embrayage (36) ;
compression du dispositif d'actionnement (1) prémonté avec le dispositif de coulisseau (9) dans le flasque central (39) de l'embrayage (36) par l'entremise d'un palier central de roulement (42) ; et
vissage de l'élément de traction (28) à l'élément de poussée (26) dans la direction axiale (A).
